# EUROPEAN PATENT APPLICATION

(11) **EP 4 098 613 A1**
(43) Date of publication of application: **07.12.2022**
(21) Application number: 21382495.6
(22) Date of filing: 03.06.2021
(51) Int. Cl.: C01B 32/50, B01D 53/62, C01B 3/24, C04B 2/12, F27B 1/00

(54) **VACUUM SWING CALCINATION PROCESS TO PRODUCE HIGH PURITY CO2 FROM CACO3**

(71) Applicant: Consejo Superior de Investigaciones Cientificas, 28006 Madrid (ES)
(72) Inventor: ABANADES GARCÍA, Juan Carlos, 33031 Oviedo (Asturias) (ES); ARIAS ROZADA, Borja, 33031 Oviedo (Asturias) (ES); FERNÁNDEZ GARCÍA, José Ramón, 33031 Oviedo (Asturias) (ES)
(74) Representative: Pons

(57) **Abstract**

This invention discloses a calcination process to produce high purity CO₂ from solids containing CaCO₃ which operates cyclically and continuously on the solids, arranged in a packed or a moving bed, and wherein each cycle comprises a first step where the combustion at atmospheric pressure of a fuel in the bed of solids containing CaCO₃ heats them up to 800-900ºC and a second step wherein a vacuum pressure between 0.05 and 0.5 atm is applied to extract pure CO₂ from the solids containing CaCO₃ while cooling them by 30-200ºC. Said combustion can be carried out directly with air, oxygen enriched air or O₂/CO₂ mixtures when the process is applied to the calcination of a continuous flow of limestone in a moving bed shaft kiln. The process is also applied to calcine CaCO₃ formed in reversible calcium looping processes comprising a carbonation reaction step to form CaCO₃ from CaO.

## Description

### OBJECT OF THE INVENTION

This invention discloses a calcination process to produce high purity CO₂ from solids containing CaCO₃. The process operates cyclically and continuously on the solids, arranged in a packed or a moving bed. The process is characterized by each cycle comprising a first step of combustion at atmospheric pressure of a fuel in the bed of solids containing CaCO₃ heating them up to 800-900ºC, and a second step of application of a vacuum pressure between 0.05 and 0.5 atm to extract pure CO₂ from the solids containing CaCO₃ while cooling them by 30-200ºC. Said combustion can be carried out directly with air, oxygen enriched air or O₂/CO₂ mixtures when the process is applied to the calcination of a continuous flow of limestone in a moving bed shaft kiln. The process is also applied to calcine CaCO₃ formed in reversible calcium looping processes comprising a carbonation reaction step to form CaCO₃ from CaO. In these cases, the preferred method of combustion of the fuel used to heating up the bed of solids containing CaCO₃ is a chemical looping process, that uses as oxygen carrier a second solid containing a metal oxide (preferably NiO or CuO) mixed in the bed of solids containing CaCO₃. In preferred embodiments, the reduced metal (Ni or Cu) resulting at the end of the combustion step is the catalyst used in a sorption enhanced reforming step or in a calcium-enhanced water gas shift reaction step where the bed of solids containing CaCO₃ is regenerated.

### FIELD OF THE INVENTION

This is a process to capture CO₂ in pure form during the calcination of CaCO₃. When the source of CaCO₃ is a natural limestone and the product is CaO, the process is applicable to shaft kilns. When the source of CaCO₃ is a process involving a step of carbonation of CaO, the process is applicable to calcium looping processes to capture CO₂ from flue gases, or to sorption enhanced reforming or sorption enhanced water gas shift processes where carbonaceous fuels are converted into hydrogen, while CaCO₃ is formed from CaO.

### BACKGROUND OF THE INVENTION

The capture of CO₂ in high purity form (for example with a volume fraction higher than 99%v in CO₂) from fuel and flue gases in industrial processes, is of interest in the context of climate change mitigation efforts. Relevant for the purpose of this invention is a family of commercial processes that capture CO₂ by separating CO₂ from other gases using vacuum pressure swing adsorption (VPSA). VPSA processes operate cyclically and continuously. In each cycle, a gas containing CO₂ is arranged to contact a packed or moving bed of solids with affinity and selectivity to adsorb CO₂. VPSA CO₂ capture systems usually work at relatively mild temperatures (<200ºC), using CO₂ sorbent materials that establish weak bonds with the CO₂ so as to minimise energy requirements during regeneration. When the bed of solid is saturated in CO₂, a system of switching valves seals the bed of solids and a vacuum pump is connected to the vessel containing the bed of solids to force the desorption of the CO₂ from the solids under pressures as low as 0.05 atm. A series of vessels containing solid sorbents, operating in parallel, allows the operation in continuous mode. Intermediate gas purge cycles, pressure balancing between beds and well-established switching control technologies allow for VPSA CO₂ capture system to be among the most competitive and least energy consuming CO₂ capture systems.

On the other hand, there are high temperature calcium looping CO₂ capture systems, using CaO as sorbent of CO₂ (usually at temperatures between 600-700ºC) to form CaCO₃. The CO₂ can be captured from combustion flue gases or during sorption enhance reforming processes or calcium-enhanced water gas shift processes, to produce hydrogen from a fuel gas while capturing CO₂ at high temperature with CaO. The operation at these high temperatures facilitates the recovery, during the exothermic carbonation of CaO (-170kJ/molCaO at 650ºC), of the equivalent energy consumed during the calcination of CaCO₃, that takes place at temperatures usually higher than 900ºC (depending on ambient concentration of CO₂).

Some of the state of the art of calcium looping processes is making use of vacuum swing principles. US2017/0096335A1 claims higher energy efficiencies by operating an adiabatic calcium looping packed bed reactor at a sufficient high pressure during the exothermic carbonation step to reach sufficiently high temperatures of the carbonated solids as to initiate a reversible vacuum-driven calcination step after each carbonation step. CaO solids heat up by up to 150° C at the end of the exothermic carbonation period. Such increase in temperature is claimed to be sufficient to sustain a subsequent vacuum calcination step, that causes an equivalent drop in temperature as the CaCO₃ is calcined. Note that no heat is added externally to the packed bed of sorbent, as the system is assumed to be adiabatic. This means that the sorbent heats up during carbonation and cools back to its original temperature during calcination indefinitely during successive carbonation/calcination cycles. Such process will however face practical limitations, that may make it not viable in practice. On one hand, real systems are not fully adiabatic. Heat transfer from the outside, or from gas reactants supplied at higher temperature than the gas products, is needed to fulfil the overall heat balance. However, there are constrains imposed to the temperatures of the gas reactants from the additional heat transfer equipment required and because in some cases, preheating such gas reactants is not viable. For example, in sorption enhanced water gas shift processes using CaO as CO₂ sorbent, the syngas (containing CO) must be fed at temperatures below 500ºC to avoid carbon deposition. Linked to this, metal dusting phenomena in the heat exchangers used as gas preheaters must be prevented by feeding gases at temperatures as low as 300ºC. However, the product gases tend to leave the reactor at higher temperature (i.e., between 650-850 °C depending on the temperature achieved during CaO carbonation). Therefore, such heat imbalance in the gases flowing in and out of the reactor must be compensated by an external heat source. Similarly, sorption enhanced reforming systems using CaO to produce H₂ from a fuel gas have even larger thermal energy constrains because reforming reactions are highly endothermic, and therefore, there is no sufficient enthalpy in the overall carbonation-reforming step to sustain the subsequent calcination step. A substantial external heat supply is therefore needed to sustain any of the referred calcium looping systems. The energy released during carbonation is simply not sufficient to drive the reverse calcination reaction in real calcium looping systems..

The problems associated with the need of external heat supply to sustain the operation of calcium looping systems are aggravated when using packed beds and when taking into account the typically low carbonation molar conversion of real CaO materials when reacting with CO₂ during many cycles. Despite intense research effort over the last decades, there is no yet a suitable and widely available CaO sorbent (i.e., with proven mechanical stability and reactivity to react fast and reversibly with CO₂ under realistic conditions in the reactors) able to sustain more than 3-10% molar carbonation conversions of CaO to CaCO₃ over hundreds or thousands of cycles, as it is the case for CaO derived from calcination from natural limestone. This means that active CaO in calcium looping processes using currently known CaO materials, will typically be accompanied by a very large portion (95-99%w when including other solids in the system such as catalyst and their supports) of materials that are inert towards carbonation. Therefore, despite the exothermic nature of carbonation of CaO, the temperature increment achievable during carbonation will not reach more than 50-150 °C (depending on carbonation conversion and fraction of inerts), which is unsuitable to connect the operating window for effective CO₂ capture by carbonation (between 600-700ºC) with the operating window for effective calcination of CaCO₃ in pure CO₂ (the decomposition temperature of CaCO₃ at atmospheric pressure in pure CO₂ is about 900ºC). Therefore, additional heat requirements during calcination are known to be needed when operating with known CaO sorbent properties (i.e. a maximum CO₂ carrying capacity of 0.05 and 0.1) and known operating windows for carbonation and calcination. Moreover, US2017/0096335A1 is silent about the need of external heat supply to their calcium looping system.

US9505998B2 discloses a solution to solve the problem of heat supply to a packed bed calciner by arranging a combustion chamber for providing additional thermal power to the calciner through a metallic wall, that separates the region containing the bed of solids with CaCO₃ from the combustion chamber. However, this solution is limited in applicability, because it requires large heat transfer areas of costly alloys to allow the necessary heat transfer between the combustor chamber and the calciner at temperatures exceeding 900ºC, in particular when considering that combustor chamber and calciner may need to operate under substantial differences in pressure.

US8506915B2 discloses another solution to the problem of heat requirements for calcination within a bed of solids containing CaCO₃ by introducing a second solid in the bed that contains Cu/CuO. This is a type of oxygen carrier material that has been developed and tested in the state of the art of chemical looping combustion or indirect combustion applications. In chemical looping combustion processes, a metal (such as Ni, Cu, Fe) is oxidised at a high temperature in an "air reactor", in a process that is highly exothermic. In a subsequent step, the metal oxide or "oxygen carrier" (such as NiO, CuO or Fe₂O₃) is reduced by a fuel gas to produce a N₂-free flue gas and regenerate the metal or "metal fuel". However, the use of metal fuel oxidation reactions with air to supply energy for CaCO₃ calcination has the problem of the unwanted dilution of the CO₂ evolved during calcination with the nitrogen contained in the air. To solve this, the key feature of US8506915B2 is the choice of the Cu/CuO chemical loop, as CuO can undertake an exothermic reduction reaction to Cu using a fuel gas (that burns primarily to CO₂ and H₂O) and supplies the necessary energy to the solids bed to drive the calcination of CaCO₃ during the reduction stage of CuO to Cu. This process has been proposed for Sorption Enhanced Reforming of methane and steam to produce a hydrogen-rich stream and high purity CO₂, using a bed of solids containing a Nickel reforming catalyst as a third additional solid to the CaO sorbent and Cu oxygen carrier ((Fernandez et al. Conceptual design of a hydrogen production process from natural gas with CO2 capture using a Ca-Cu chemical loop, International Journal of Greenhouse Gas Control 2012, | Volume 6 | Page 126-141). Another variant of such process has been recently been proposed to treat steel mill off gases, like blast furnace gas, BFG, in the so called CASOH process, where a bed of solids containing CaO first removes the CO₂ contained in the BFG and promotes the enhanced water gas shift of the CO by capturing the resulting CO₂ as CaCO₃. In a subsequent step, the reduction of CuO with a fuel gas such as CH₄ can regenerate CaO while producing CO₂ and water vapour (Fernandez et al. Advanced Packed-Bed Ca-Cu Looping Process for the CO2 Capture From Steel Mill Off-Gases, Frontiers in Energy Research 2020, July 2020 | Volume 8 | Article 146). The design of these combined calcium looping and chemical looping processes reveals that they can be highly energy efficient if, and only if, an effective heat recovery for power generation is included in the system. This is because these processes require to function with an intermediate additional reaction step involving the oxidation of the Cu with air, before the desired reduction-calcination step. Such oxidation introduces demands for a technically challenging operation at high pressure, needed to minimise the calcination of CaCO₃ during the oxidation of Cu. The need of additional power generation equipment is a weakness in practical applications targeting a maximum production yield of H₂ from sorption enhanced reforming or calcium-enhanced water gas shift processes, where it is technically more attractive to maximise the H₂ yield (because this is the product targeted from such processes) than maximise the thermal energy outputs from the process (even if they are in the form of high temperature gas product streams).

Also related to this invention are patents related to the application of vacuum pressure to a calcination process of limestone, so that the CO₂ evolved from the calcination of CaCO₃ can be obtained separately or even in pure form.

US4748010 reviews in detail prior state of the art on vacuum calcination of batches of limestone to produce lime. It discloses a semi-continuous CaCO₃ calcination process that attempts to exploit the favourable calcination conditions achieved when a vacuum is applied to a preheated stone containing CaO and CaCO₃. In a first step, the limestone is heated and partially calcined by air combustion until 50-85% calcination conversion is achieved (i.e., % of mol of CaCO₃ converted to CaO) obtaining a hot mass with sufficient accumulated heat to complete the calcination of the remaining unconverted limestone therein in one final cycle. To do this, the hot mass of solids are moved to a vacuum chamber zone, where the complete conversion of the limestone is achieved using the retained heat in the solids, while subjecting the partially calcined hot mass to a sufficiently strong vacuum during the time needed to achieve total conversion of the limestone. It must be noted that US4748010 is not intended to be a CO₂ capture process, because most of the CO₂ evolved during calcination is emitted in diluted form in flue gases emitted during the first heating up step and partial calcination of the limestone, under standard combustion conditions in the kiln. Furthermore, it is important to note that the fraction of pure CO₂ attainable by the method disclosed in US4748010 will not exceed in reality more than 10% molar conversion of the initial mass of limestone, due to known thermodynamic and kinetic constrains, that are briefly explained below.

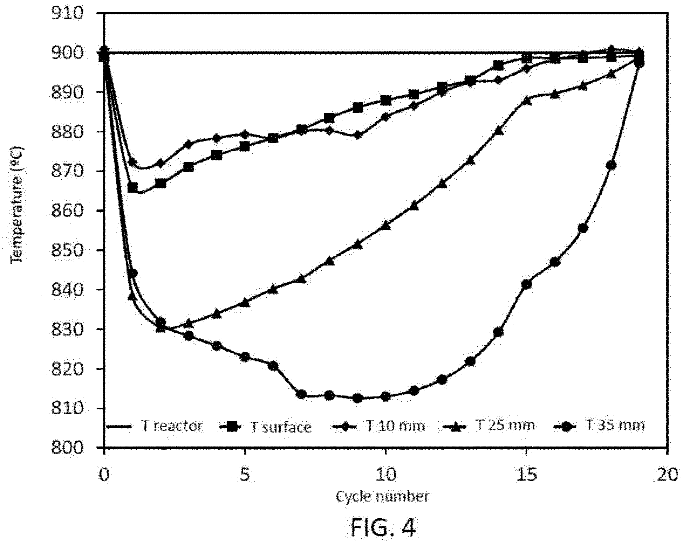

Hills, AWD; "The mechanism of the thermal decomposition of calcium carbonate" Chemical Engineering Science, 1968, Vol. 23, pp. 297-320, investigated how the decrease in the partial pressure of CO₂ around a calcining stone (or a stone containing a core of CaCO₃) results in an initially fast calcination rate and a decrease in the temperature of the carbonated core. For example, Figure 4 of Hills shows a decrease in temperature in the interior of a calcining particle of 1 cm diameter once it is subjected to a step change in the partial pressure of CO₂ in the surroundings of the particle held at atmospheric pressure. The decrease in temperature recorded in the interior is a sign of a fast heat transfer from the interior towards the external CaCO₃ stone surface, partially driving the calcination. After such initial drop in temperature (about 50ºC in less than 5 minutes) the internal parts of the stone must reach a temperature of the exterior and slow heat transfer from the external CaO part of the partially calcined stones towards the shrinking carbonated core becomes the governing process in the overall calcination rate of the stone. Note that the complete calcination is achieved after 70 minutes in the example of such Figure 4 for a 1 cm diameter particle in an oven environment at 867ºC. Following the teachings of Hills, it is possible to assume close to adiabatic conditions during the final vacuum calcination stage of a large bed or batch of stones as in US4748010, and estimate (using the energy conservation law) the adiabatic drop in temperature when applying vacuum pressure. For example, a batch containing a molar fraction of 0.9 of CaO and 0.1 of CaCO₃, assuming an enthalpy of calcination at 900ºC as 167kJ/mol, would experience a drop in temperature of more than 340ºC under vacuum calcination. Such drop would bring the solids to a temperature of just 560ºC (900-340=560ºC). According to the equilibrium of CO₂ on CaO given by Hills, a vacuum pressure as low as 0.001 atm would be needed to achieve calcination, and the calcination rate would be impractically slow. On the other hand, a more adequate target for the temperature drop induced in the vacuum step in US4748010, of less than 150ºC, would lead to a maximum calcination molar conversion of 7%. However, such low fraction of CO₂ recovered during the single vacuum step in US4748010 would translate into unacceptable low CO₂ recovery (i.e., of less than 7%) if US4748010 was used as a method to produce pure CO₂ from the decomposition of CaCO₃.

To overcome these technical limitations, means for heat transfer is clearly needed towards the calcining solids located in a packed or moving bed of solids. As discussed above for calcium looping systems, there are methods proposed that involve indirect heat exchange to the vacuum calcination chamber through a metallic wall (see for example US2080981). However, such indirect calcination processes are likely to require very large and costly heat transfer areas of high temperature alloys, to withstand the high temperatures characteristic for the calcination of CaCO₃ and the differences in pressure between both sides of the heat transfer wall.

On the other hand, the state-of-the-art solution to produce concentrated CO₂ from the decomposition of CaCO₃ is to burn a fuel in the vicinity of the calcining solids, using comburent mixtures of air enriched in O₂ or even N₂-free CO₂/O₂ mixtures. Such oxy-combustion CaCO₃ calcination systems have been developed for a range of cement manufacturing processes, lime kilns and calcium looping processes (including postcombustion CO₂ capture processes and sorption enhanced reforming and water gas shift processes) involving fluidised bed or entrained bed technologies, that facilitate heat transfer processes at particle level toward the calcining particles. Among other disadvantages for their application to packed bed of solids, all oxycombustion methods share the disadvantage of the need of additional equipment to separate O₂ from air and the additional electricity requirements to drive the air separation unit (or oxygen enrichment plant). They also need downstream purification devices for CO₂, that are also energy consumers, as the flue gases from oxycombustion contain variable fractions of O₂, water vapour and inert gases (from air ingress) that need to be removed before transporting the CO₂ for use or storage.

Finally, also relevant for this invention is a family of industrial processes where the calcination of limestone minerals containing CaCO₃ is carried out to produce calcined materials including CaO, emitting diluted CO₂ in the combustion flue gases from the calcination of CaCO₃. Modern commercial designs of lime shaft kilns (i.e., countercurrent shaft kilns, parallel flow regenerative kiln, annular shaft kilns etc), have high energy efficiencies, very high conversions of limestone to lime and a suitable quality of the lime product ("Lime Shaft Kilns", Hannes Piringer, Energy Procedia 120 (2017) 75-95). About 3/4^{th} of the CO₂ emitted by the kiln arises from the decomposition of CaCO₃ (the rest comes from the combustion of a carbonaceous fuel in air). This means that, unlike other systems relying on combustion, these air-fired kilns cannot be decarbonized today by using renewable fuels such as hydrogen or metal fuels (i.e., Fe, Ni, Cu materials exothermically oxidized by air), because a solution would still be needed to capture the CO₂ evolved from calcination. Shaft kilns operate by tuning the combustion conditions in a quasi-adiabatic calcination or burning zone typically located in a central part of the kiln. With such arrangement, hot flue gases evolved from the calcination zone preheat the limestone fed at the top of the kiln and the hot lime produced in the calcination zone is used to preheat the air coming in the kiln to sustain combustion. In parallel flow regenerative shaft kilns (containing two shafts), an inherent part of the process consists on operating the kiln in a cyclic way, by applying a temperature swing to the solids alternating combustion periods (of about 10-20 min long) in each shaft and no-combustion conditions (during which the shaft behaves as a regenerative gas-solid heat exchanger). To achieve continuous operation, these processes require the two parallel shafts operating at opposite modes at any point in time. Very long residence time of the solids are required in these kilns (between 10 and 20 hours, depending on the stone size and on other characteristics affecting the heat transfer to the stone). In contrast, the flue gas resides in the kiln less than 20 seconds, with gas velocities maintained between 1-2 m/s to moderate pressure drop and solids entrainment. The exterior surface of the stone may have temperatures from 900-1800ºC depending on fuel firing conditions. Staging of fuel feeding points and low air-excess are known to allow larger flames and milder local flame temperatures in the vicinity of the stones. Largely unaffected by the temperature in the exterior the stone (Furnas, The Rate of Calcination of Limestone; Industrial and Engineering Chemistry, 1931, 23(5), 534-538), the core of unconverted CaCO₃ remains at temperatures quite constant under or around 900ºC (i.e., close to the equilibrium temperature of CO₂ on CaO at atmospheric pressure). In contrast, in stones that have not yet reached the calcination zone (i.e., those in the preheating zone of the kiln) the heat transfer from the flue gas to the CaCO₃ rich stone allows more uniform temperature profiles between the core and the external surface of the solids and the difference in temperature between the core and the gas may be less than 50ºC.

From the previous review of the state of the art, it can be concluded that there is still a need for technically viable, energy and product efficient process to obtain pure CO₂ from the decomposition of the CaCO₃ contained in the limestone fed to lime kilns or from the CaCO₃ formed in calcium looping processes carried out in packed or moving beds. The process of the present invention maintains or exceeds the high energy efficiency and product qualities of non-CO₂ capture processes involving CaCO₃ calcination, such as limestone calcination processes in lime shaft kilns, sorption enhanced calcium looping reforming processes and calcium-enhanced water gas shift processes for hydrogen production (where CaO acts as a CO₂ sorbent).

### DESCRIPTION OF THE INVENTION

The main object of the present invention is to provide a process to recover in high purity form part of the CO₂ released from the calcination of solids containing CaCO₃. The process is applicable to processes for calcination of limestone in shaft kilns, which are thermally insulated vessels that have moving bed of solids containing CaCO₃ in the calcination region of the shaft kiln. The method is also applicable to calcium looping processes using thermally insulated vessels containing packed beds of solids containing CaCO₃, in this case formed during the capture of CO₂ by CaO in contact with a combustion flue gas or any other gas containing CO₂, or during the sorption enhanced reforming or sorption enhanced water gas shift process steps, that convert fuel gases to hydrogen when in the presence CaO and other gases, forming CaCO₃.

All said processes comprise of a number of known steps to achieve the desired products without capturing CO₂ in separate form, or require additional inefficient process steps to capture such CO₂ as reviewed in the state of the art. Therefore, they will all benefit from a process to recover in pure form the CO₂ released from the calcination of solids containing CaCO₃ arranged in a thermally insulated vessel. In the framework of such existing processes, we assume that solids are preheated to a temperature between 650-800ºC and are arranged in a thermally insulated vessel able to withstand vacuum swings. This invention provides a calcination process characterized by the continuous repetition, at least twice, of a sequence of at least the following consecutive steps:
i) a heating up step lasting between 5-20 minutes, combusting a fuel within the bed of solids, to heat up the bed of solids containing CaCO₃ to 800-900ºC.
ii)a vacuum step lasting between 5-20 minutes, applying an under-atmospheric pressure of 0.05-0.5 atm to the bed of solids.
In this way, the process gives as reaction products CO₂ and CaO, and causes a temperature drop in the bed of solids of between 30-200ºC. Also, there is an increase in molar conversion of CaCO₃ to CaO of 0.01 to 0.07.

Preferably, the combustion of the fuel is carried out with air, oxygen-enriched air or O₂-CO₂ comburent mixtures.

The intention with the previous sequence of steps is to exploit the large difference between heating times and calcination times of the typically large particle sizes (10-150 mm) of limestones processed in shaft kiln calciners or in the particles or pellets (2-10 mm) used in calcium looping processes in packed beds. As quantified below in several examples and experiments, the higher heating rate of the particles in step i) respect to their calcination rate in the same step i), allows for the introduction to the bed of particles of a certain amount of thermal energy to heat them up, while limiting the progress of the calcination of CaCO₃. It is however unavoidable at this stage to initiate a certain calcination of the CaCO₃, and loose some of the CO₂ evolved in such calcination as diluted gas in the flue gases generated by the combustion of a fuel in the bed. At the end of step i) the solids have heated up to an average temperature of 800-900ºC from a lower initial temperature (30-200ºC lower) that resulted from the application of vacuum in the previous step ii). The use as comburent of oxygen enriched air, or mixtures of O₂ and CO₂, instead of air during the combustion of the fuel i), will have a beneficial effect in minimising the decomposition of CaCO₃ during the combustion step i). This is because combustion with higher O₂ content allows higher concentrations of CO₂ in the flue gas, known to reduce the rate of calcination. For example, when the CO₂ content of a flue gas enriched in CO₂ is 50%v at atmospheric pressure the calcination rate of CaCO₃ is extremely slow compared to the heating rate of the stone until the stone reaches a close value to 850ºC (see other examples below). This is because the equilibrium partial pressure of CO₂ on CaO at 850ºC is close to 0.5 atm. The use of said comburents with high O₂ content during step i), also facilitates the introduction of the necessary energy for calcination in a shorter times of the step i). This is beneficial because it allows the introducion of the vacuum step ii) in the process without altering the overall/average thermal power input to the kiln over long periods of time. In other words, introducing step ii) without increasing the power input during the i) would necessarily translate into a reduction of the average production rate of CaO. This will impact directly the production rate of lime in a shaft kiln or the rate or capacity of the Calcium Looping capture system using such CaO to capture CO₂.

Therefore a preferred embodiment of this invention further comprises the combustion of the fuel (8) carried out with oxygen-enriched air or O₂-CO₂ comburent mixtures (9). As will be ilustrated in one example below for a lime kiln, adopting a time for step i) identical that for step ii) requires the power input during step i) to double respect to the state of the art process without capture, in order to maintain the same overall lime production capacity. Therefore, the use of a comburent mixture of about 40%vol in O₂, which is part of the state of the art of oxy-combustion systems, will facilitate this doubling of power input while keeping similar flowrates of gases in the kiln, that is important to be able to maintain heat transfer characteristics, pressure drop in the bed, energy efficiencies etc. respect to the those in modern kilns with no CO₂ capture.

When the stone or carbonated sorbent has been heated to a temperature between 800-900ºC at the end of step i), the onset of the vaccum step ii) promotes a fast partial calcination of the CaCO₃ containing solids, that is associated with an equally fast drop in temperature in said solids. In an industrial scale packed bed, with many stones or carbonated sorbent calcining under vacuum at the same time, the release of CO₂ will be controlled at this point by the maximum capacity of the vacuum pump to handle the CO₂ flow. However, the rate of calcination will eventually decrease with time, as calcination progresses, the availability of heat in the interior of the stone diminishes, and temperature profiles develop in the stone or sorbent. The temperature in the interior of the stone would decreases to values where the intrinsic calcination rate is too slow at the conditions of temperature and partial pressure of CO₂ in the calcination reaction front (which can be assumed to be at equilibrium conditions for temperatures over 700ºC). In view of experimental results shown below, after 5-20 minutes of vacuum a drop in average temperature in the bed of solids (between 30-200ºC is caused. This is associated under adiabatic conditions to an increase in molar conversion of CaCO₃ to CaO, or a decrease in CaCO₃ molar fraction, of 0.01 to 0.07. At this point, a return path must be initiated to re-heat the bed of solids. This is the purpose of step i), which involves a combustion step taking place within the bed of solids, to facilitate a fast heat transfer of the combustion energy to the solids, that have just been cooled during the vacumm step ii).

When the thermally insulated vessel is a lime shaft kiln, the cyclic sequence noted above is repeated until each stone of limestone initially fed to the kiln is fully calcined in the shaft kiln, following the teachings of the state of the art of lime shaft kilns. Following such teachings, such kiln can be operated in continuous mode in a moving bed configuration, comprising a step of introducing to the top of the kiln a batch of particles of solids containing CaCO₃ to the thermally insulated vessel so that the solids are displaced downwards in each combustion step while extracting a batch of particles containing CaO from the bottom of the kiln.

In a preferred embodiment, the thermally insulated vessel of the process of this invention is the calcination section of a shaft kiln that additionally contains a limestone preheating zone at the top of the kiln and a CaO cooling section that also preheats combustion air (or oxygen enriched air or O₂/CO₂ mixture, if such comburent is preferred to sustain higher thermal power and higher partial pressures of CO₂ during the combustion or heating up in step i).

The invention also refers to a shaft kiln suitable to carry out the calcination process noted above. The shaft kiln having means to effectively burn a fuel with preheated air, enriched air or O₂/CO₂ in its calcination zone, said kiln having walls thermally insulated and capable to operate under vacuum pressure and characterized by having inlet and outlet gas and solid pipes containing switching valves with at least one of the pipes having a vacuum switching valve connected to a vacuum pump to alternate in a cyclic manner between these operating periods:
i.a first operating period lasting between 5-20 min where fuel is burned in the calcination zone, with the comburent being preheated by the CaO product and the limestone being preheated with the combustion flue gases flowing from the calcination zone. Said first operating period having means for feeding a batch of limestone through a solid valve and extracting lime with another solid valve.
ii.a second operating period lasting between 5-20 minutes where gas entries/outlets and valves for solids are sealed except one gas outlet where a vacuum pressure is applied using a pump to extract pure CO₂.

A particular variant when the comburent mixture is O₂/CO₂ involves the staging of separate streams of O₂ (from an air separation unit) and CO₂ (recycled) to prevent carbonation of the CaO exiting the kiln.

If a double shaft kiln is used, this will operate step i) with combustion in just one shaft using part of the air preheated with the bed of limestone preheating region, while arranging an additional flow of air to enter the second shaft, in order to transport heat from the lime cooling region and the hot flue gases to the limestone preheating region and use such heat to preheat part of the air entering the kiln from the top.

Following the teachings of the state of the art of gas burners in kilns, air and fuel distribution in the calcination region of the kiln (1) during step i) can be arranged in many forms to accommodate maximum allowed temperatures in the kiln as required by CaO quality requirements. However, it is important to realise that, since kilns are usually firing a fuel continuously, the introduction of the vacuum step ii) in the methods of this invention to operate lime kilns, necessarily represent a drop in lime production capacity proportional to the ratio between the duration of time ii) and the total duration of one cycle of combustion and vacuum steps (t1+t2). Therefore, a preferred embodiment to solve this is to increase the thermal power input during step i) and so that the thermal power of the combustion during step i) is the result of the multiplication of the average power input in the equivalent kiln without CO₂ capture and the ratio between the sum of the duration step i) and ii) divided by the duration of step i).

Lime kilns can also be operated with solid fuels in step i), by mixing the right proportion of a solid fuel with the limestone feed. In order to minimise emissions of CO₂ and other gas contaminants during the step i) involving combustion of the solid fuel, it is a preferred embodiment to use as solid fuel a metal such as Fe, Ni or Cu, that exothermically oxidizes with air and that is fed contained in a second solid that is mixed with the solids containing CaCO₃. The intense premixing of the solid fuel with the limestone will lead to a more controlled temperature profiles and homogeneous combustion in the calcination zone of the kiln. As will be shown in examples below, it is possible to maximise the heating of particles containing CaCO₃, while minimising the calcination of the CaCO₃ during combustion step using a metal fuel, because the energy for the heating of the solids (by 30-200ºC as mentioned above) is a small fraction of the energy required for their calcination. Therefore the quantity of air needed for metal fuel oxidation is small, and the maximum losses of CO₂ in such small air mass (given by the equilibrium of CO₂ on CaO at the maximum heating temperature) will aso be small.

When the calcination process of this invention is applied to calcium looping processes, the solids containing CaCO₃ come from a previous carbonation reaction step that is characteristic of all calcium looping processes, which involves the carbonation of CaO to CaCO₃. There is no longer need of a continuous feeding from the outside of CaCO₃, because the calcium looping process is reversible: the CaCO₃ formed during carbonation step is mainly the CaCO₃ that will be calcined during the calcination stage (note that there may be also small fraction of CaCO₃ coming from purges or initial batches of CaCO₃ or CaO). In these calcium looping systems, due to the limited value o reversible carbonation molar conversions of the known CaO sorbents (0.03 to 0.1), and the dilution of the Ca-containing solids with catalyst and their supports, it is not favourable to arrange a direct combustion of a fuel with air within the bed of solids. This is because local flames and hot spots would damage the integrity and activity of catalyst and/or sorbent. Therefore, it is important in these systems to undertake the heating up step i) by indirect combustion of a fuel, following the teachings of chemical looping combustion processes in packed beds.
Therefore, preferred embodiments of this invention refer to the application of the calcination method of this invention to a calcium looping processes that use packed beds, where solids containing CaCO₃ are formed from CaO and CO₂ during a carbonation step, in the presence of a second solid containing a metal such as Ni or Cu acting as catalyst and/or oxygen carrier, where the combustion taking place in during the heating up step is an indirect chemical looping combustion of the gaseous fuel with air by dividing the fuel combustion period i) in two sub-steps:
j) a first sub-step involving the oxidation with air at a pressure of 1-5 atmospheres of a second solid containing a metal such as Ni or Cu, the second solid being mixed in the bed of CaCO₃ containing solids and releasing a flue gas composed of a major fraction of nitrogen and a minor fraction of CO₂ from the partial decomposition of CaCO₃. The operation of this step at high pressures reduces the fraction of CO₂ released in the flue gases and/or allows a heating of the bed of solids to a higher temperature, which is beneficial for the step ii)
jj) a second sub-step at atmospheric pressure, involving the reduction of the of the oxidised form of the metal fuel formed in j) by feeding a fuel gas to regenerate the metal fuel in the second solid while releasing concentrated CO₂.

Such second sub-step is therefore regenerating the metal catalyst, that must be in reduced form to maintain catalytic activity during the sorption enhanced reactions of natural gas and steam or water gas shift taking place at the same time than the step of carbonation of CaO.

A preferred embodiment the calcination process of this invention is applied to a postcombustion CO₂ capture process by calcium looping characterized by an additional carbonation step iii) of the CaO generated in step ii) by feeding a combustion flue gas or any other gas containing CO₂ to the packed bed of solids, to the packed bed of solids to increase the molar conversion of CaO to CaCO₃ between 0.03 and 0.1 and restore the CaCO₃ that is in the bed of solids at the beginning of step i).

In another preferred embodiment the calcination process of this invention is applied to a sorption enhanced reforming process in packed beds, SER. Such process requires a second solid in the bed that contains Ni, that is known to perform as a metal fuel (in step i)) and as reforming catalyst during SER step. Such SER step includes a carbonation step iii) of the CaO generated in step ii) by feeding a fuel gas and steam to the packed bed of solids containing CaO and Ni. The sorption of CO₂ by carbonation of CaO enhances the steam reforming of the fuel gas to hydrogen while increasing the molar conversion of CaO to CaCO₃ between 0.03 and 0.1 and restore the CaCO₃ that is in the packed bed of solids at the beginning of step i).

A favourable SER process variant of this embodiment allows a higher yield of H₂, by introducing an additional step after the sorption enhanced process by carbonation iii) and before the beginning of a new cycle N+1 with step i), consisting in the feeding a fuel gas (13) and steam (14) to the packed bed of carbonated solids to produce a syngas that is used as fuel gas (8) in sub-step jj) of the next step i) in the cycle N+1. As will be shown in the example below, this is possible because of the high quantity of thermal energy contained in the bed of carbonated solids at the end of step iii). Such thermal energy available at high temperature can sustain a partial steam reforming of the natural gas, to generate a syngas with higher energy content while decreasing the temperature of the carbonated bed of solids (see Example 3 below)

In another preferred embodiment, the calcination process of this invention is applied to a sorption enhanced water gas shift process carried out in packed beds, the process being characterized by the metal fuel and water gas shift catalyst being Cu and by an additional carbonation step iii) of the CaO generated in step ii) by feeding a gas containing CO and steam to the packed bed of solids containing CaO and Cu to enhance the water gas shift reaction of the CO contained in to hydrogen an CO₂ while increasing the molar conversion of CaO to CaCO₃ between 0.03 and 0.1 and restoring the CaCO₃ that is in the bed of solids at the beginning of step i).

In previous embodiments of the process, it is possible to introduce short additional gas purging/rinsing steps for security and gas purity reasons. One particular additional step valid for all embodiments disclosed is characterised by the introduction an additional gas rejection step by which a gas volume of 1-3 times of the void volume of gas in the packed bed of solids is discharged at the beginning of the vacuum period ii). This action will avoid the mixing with the pure CO₂ evolved during the vacuum calcination of CaCO₃ of the small mass of non-CO₂ gases present in interstices of the bed of solids at the beginnig of step ii).

### BRIEF DESCRIPTION OF THE DRAWINGS

The figures below reflect aspects for the practical execution of the process and facilitate the understanding of the main differences of the invention with respect to the state of the art, but they should not be considered as to limit the scope of the invention. Figures use numbers to name physical elements, devices and materials required to carry out the methods. Thick black arrows represent solid and gas mass streams entering/exiting the devices. The characterising sequences of steps of preferred embodiments are marked in roman numbers i), ii), iii), lasting a time t1 to t3, with the changes between steps marked with void thick arrows. Dashed line boundaries represent full cycles N of the process of this invention, containing several steps and sub-steps per cycle.
Figure 1 illustrates a single cycle (N) of the calcination process of this invention, having a sequence of a heating up step by combustion of a fuel (8) in air or enriched air (9) followed by a vacuum step to calcine a certain fraction of CaCO₃ (4), contained in a solid with CaO (5), to produce pure CO₂ (7).
Figure 2 Example of a two complete calcination experiments (without cycling) of a limestone rock of 7 cm at 900ºC under vacuum and under air at atmospheric pressure.
Figure 3. Temperature evolution in different radial positions (dotted lines, left axis) when a vacuum pressure (solid line, right axis) is applied to a single limestone rock of 35mm radius in an oven at 900ºC. Four consecutive heating-vacuum cycles only.
Figure 4: Evolution with the number of vacuum-heating cycles of the minimum temperature achieved in different points in the interior of a limestone rock at conditions as in Figure 3 during the 19 heating-vacuum cycles required to calcine this stone.
Figure 5. Evolution with the number of heating-vacuum cycles of the average molar calcination conversion (dots) in the vacuum calcining experiment of Figure 4. Triangles represent the adiabatic minimum temperature (in the right axis) linked to the increase in calcination conversion in each cycle.
Figure 6. Heat transfer model predictions of the energy absorbed in 15 minutes by spherical stones of CaO (circles) or CaCO₃ (triangles) with an initial temperature is 800ºC and exposed to an external gas environment during the heating step of 900ºC.
Figure 7. Heat transfer model predictions of the power transferred to a spherical core of CaCO₃ of 70mm diameter when the initial temperature of the core is 800ºC and the external temperature in the core surface is 900ºC. Dashed horizontal line indicates the power required to promote the shrinking rate of the same core given by Furnas calcination model at 900ºC.

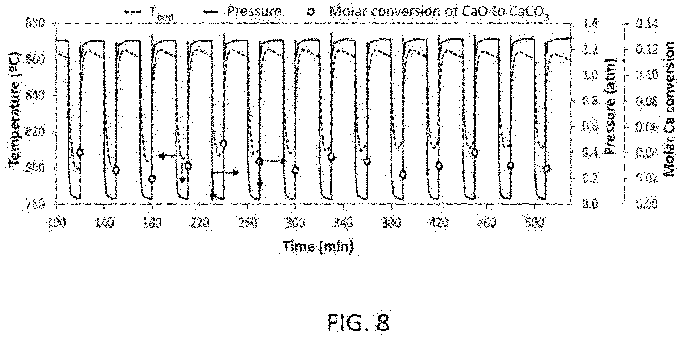

Figure 8 Example of experimental results when calcining a batch of 185 g of CaO particles of 4 mm diameter in an oven at 870ºC, plotting 14 consecutive cycles involving vacuum and heating steps, that include the carbonation of CaO to its maximum carrying capacity (of 3.4% molar conversion in average). Dotted lines represent the temperature (left axis) evolution in the centre of the bed when a vacuum swing (solid line, right axis in atm) is applied. The white dots (second scale in the left hand side) represents evolution of the average increment/decrease in calcium carbonate conversions during carbonation/calcination cycles.
Figure 9. Schematic representation of the calcination process of this invention when calcining pure CaCO₃ to CaO in seven combustion-vacuum cycles on each stone, while feeding a batch of limestone (4) and extracting an equivalent batch of lime (5) in each cycle.
Figure 10. Schematic of a single shaft kiln to carry out the process of Figure 9.
Figure 11. Schematic of a double shaft kiln to carry out the process of Figure 9 during a combustion-vacuum cycle with combustion on the left shaft.
Figure 12. Schematic of a double shaft kiln to carry out the process of Figure 9 during a combustion-vacuum cycle with combustion on the right shaft.
Figure 13. Schematic of the calcination process of Figure 1 when the fuel (8) of Figure 1 is changed to a metallic fuel (Me), previously mixed with the solids containing CaCO₃ (4) and CaO (5).
Figure 14. Schematic of the calcination process of Figure 1 when combustion of the fuel (8) is carried out by chemical looping combustion, by oxidising the metal with air to MeO and regenerating the metallic solid fuel (Me) from its oxidised form by reduction with a fuel gas (8).
Figure 15. Schematic of the processes when there is an additional carbonation reaction step after each vacuum step, regenerating the CaCO₃ decomposed during the vacuum step by the carbonation of CaO with CO₂ contained in a gas (13) reacting with part of the CaO (5) in the bed to give CaCO₃ (5).
Figure 16. Schematic of a packed bed temperature and pressure swing system to carry out the process of Figure 15 for sorption enhanced reactions of steam reforming or water gas shift using CaO as CO₂ sorbent.
Figure 17. Schematic of a variant of the process of Figure 15 for sorption enhanced steam reforming, where an additional steam reforming step kk) is added to produce a higher heating value fuel for step jj) (8) from natural gas and steam.

### DETAILED DESCRIPTION OF THE INVENTION

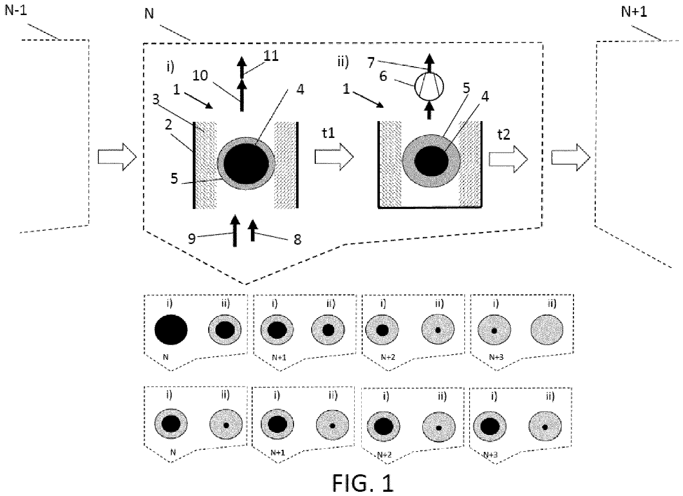

Reference is made from this point to the accompanying drawings to define preferred embodiments of the invention and provide experimental evidence to support the claims. Figure 1 represents the sequence of process steps of the invention. All other embodiments disclosed below contain the steps disclosed in Figure 1. The target of the process is to calcine solids containing CaCO₃ (4) to produce a pure stream of CO₂ (7) from the decomposition of CaCO₃ into CaO (5). In the particular illustration of Figure 1, a single particle containing CaCO₃ (arbitrarily located in a central core (4) as a black circle) is partially calcined to a particle containing a higher content of CaO (5), marked in grey. The particle is located in a thermally insulated vessel (1) that is gas tight, thanks to a metal enclosure (2) that is refractory lined (3). The thermally insulated vessel (1) allows the combustion of a fuel (8) with air or other comburent mix (9) within the bed of solids containing CaCO₃, exhausting the flue gases containing CO₂ (10) and other gases rich in nitrogen (11). A critical aspect of this invention is that, for each particle in the bed, the calcination occurs incrementally in cycles: N-1, N, N+1 etc. This means that a multiplicity of cycles is needed to achieve the complete molar conversion of CaCO₃ to CaO of an individual limestone particle. For simplicity, only 4 of those cycles (N=1 to N=4 for each particle) are represented in Figure 1. In a continuous process where N runs indefinitely, with a continuous supply of limestone particles to the thermally insulated vessel used for calcination and the continuous extraction of an equivalent flow of lime particles, an individual particle would enter the vessel (1) in cycle N and abandon the vessel in a cycle higher than N+4, to achieve full calcination as in the illustration of Figure 1.
Alternatively, the content of the CaCO₃ in the original solid undertaking a partial calcination in cycle N may be the result of a previous carbonation process step (not shown in Figure 1 for simplicity in the N-1 box). This is common practice in existing calcium looping processes for CO₂ capture, where individual CaO sorbent particles ideally operate indefinitely in reversible carbonation-calcination cycles. For simplicity, only 4 of those reversible cycles are represented in Figure 1 (N to N+3), showing only the two characterising steps of this invention for each cycle.
Therefore, the process of this invention comprises the partial calcination of CaCO₃ containing solids in repetitive cycles, N, characterized by each cycle having a sequence of at least these two steps as represented in the top of Figure 1:
i) a heating up step involving a fuel combustion lasting between 5-20 minutes (t1), burning a fuel (8) within the bed of solids, using air or other comburent mix (9), to heat up the bed of solids containing CaCO₃ to 800-900ºC. The design objective of this combustion step is just to heat up the solids, with a minimum calcination degree.
ii) a vacuum step lasting between 5-20 minutes (t2), applying an under-atmospheric pressure of 0.05-0.5 atm to the bed of solids, to promote the calcination of CaCO₃ (4), giving as reaction products pure CO₂ (7) and CaO (5), and causing a temperature drop in the bed of solids of between 30-200ºC. The maximum temperature drop will be given by the adiabatic temperature of calcination considering the partial pressure imposed by the vacuum pump on the solids. However, the effective temperature drop depends on many factors (porosity of the solids, particle diameter etc) that will influence the actual partial pressure of CO₂ in the calcination reaction front, considering the resistances that such CO₂ calcination flow will experience to abandon such calcination front to reach the bulk gas space between particles.

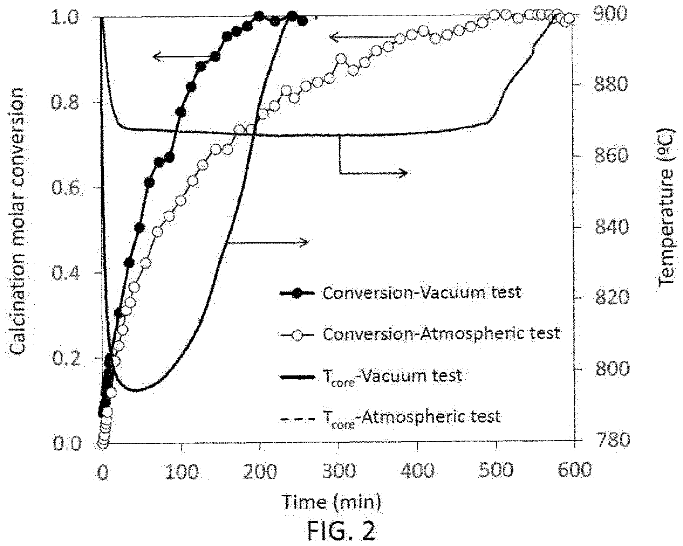

In order to achieve a high recovery efficiency of pure CO₂ respect to the total CO₂ contained in the solids as CaCO₂, it is important to maximise the quantity of CO₂ released by calcination during ii) and minimise such quantity during i). To gain insight into dynamic heat transfer and calcination phenomena during step i) and ii) we built an experimental device to illustrate the process of this invention for a single limestone rock and for a small bed of CaCO₃ containing solids. In addition, existing models for dynamic heat transfer (solved in COMSOL) and state of the art thermodynamics and kinetics of calcination of CaCO₃ have been used to define preferred but not restrictive values for t1 and t2 as a function of the characteristics of the material containing CaCO₃ and operating conditions. The laboratory scale experimental device to test calcination by successive heating-vacuum cycles is a steel vessel of 130 mm id and 200 mm height surrounded by an electric oven to control the temperature in the gas environment of the device. In typical experiments as plotted in Figures 2, this device contained a single limestone rock of 35 mm radius. The rock is drilled to install a thermocouple at the centre of the rock, so that the evolution of the temperature is monitored continuously during experiments along with the device's pressure. A vacuum pump is connected to the reactor exit. To simplify the experimental set up, the heating up step of the rock is carried out without combustion, by simply waiting for the oven to heat up the rock while in an atmosphere of pure CO₂ that prevents calcination. The whole experimental set up (reactor+stone+thermocouple(s)) is arranged to be standing on an electronic scale, in order to be able to track continuously the changes in the mass of the stone with time and determine the evolution of the molar conversion of CaCO₃ to CaO with time. Figure 2 shows the difference in measured temperatures in the interior of the stone during calcination under an air flow (solid lines) and vacuum (dashed lines). The evolution with time of the molar conversion of CaCO₃ to CaO is plotted on the right axis for the two experiments (black dots at atmospheric pressure, white dots under vacuum). Both experiments use similar stone, with >98%w CaCO₃, diameter of about 7 cm, 900ºC in the oven set point and a maximum of 5%vol of CO₂. The air experimental results are consistent with known shrinking core models during calcination of these large rocks: at the 900ºC of the air in this experiment, the temperature drop in the core of the stone (minimum at 866ºC) marks the partial pressure of CO₂ in the calcination front during calcination, because at these high temperatures no intrinsic kinetic limitations exist to the progress of calcination. During the vacuum experiment, the results indicate a bigger drop in temperature in the centre of the stone, consistent with a faster transfer of the CO₂ from the calcination front to the exterior of the stone facilitated by the low vacuum pressure (i.e. as compared by gas diffusion during the air calcination experiment at atmospheric pressure). Such drop in temperature (minimum at 795ºC linked to a partial pressure in the calcination front of 0.2 atm) translates into a faster rate of heat transfer between the external surface of the stone and the calcination front, thereby increasing the calcination rate. Note that such calcination rate is largely determined in both cases by heat transfer from the exterior of the stone (at about 900ºC) to the cooler cores. The shorter calcination time under vacuum is consistent with the larger temperature difference between exterior and core. It is important to note that in the initial minutes of the experiments, there must be an additional source of energy for calcination, linked to fast rate of heat transfer from the carbonated core (the stone was preheated to 900ºC under pure CO₂ to before the start of calcination) towards the calcination front. This is consistent with observed fast cooling of the center of the stone at the very beginning of the experiment (in particular during the first 20 minutes) and with the sharp initial increase in calcination conversion. When the initial quantity of sensitive heat available in the interior has been transferred to the calcination front (i.e., heat flowing from the inside to the outside is reduced), such core temperature must approach the temperature of the calcination front. The heat transfer from the external surface of the stone to the calcination is at that point the main controlling mechanism to of calcination rates under these conditions.

We must highlight at this point that the advantage of a much faster calcination rate when the core of the stone starts at a temperature higher than the minimum given by calcination controlled by external heat transfer, has not yet been exploited in practice. As reviewed in the state of the art, in industrial scale vessels with packed beds of solids containing CaCO₃, the limiting factor of calcination is not the transfer of heat to an individual stone from the inside of the stone, but the transfer of heat to the whole packed bed of material in the vessel.

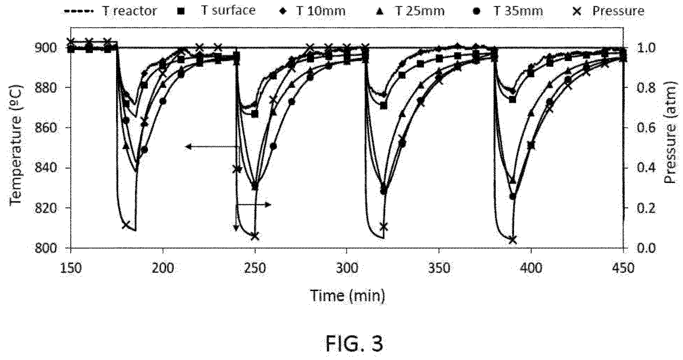

The method disclosed in this invention, involving a continuous repetition of cycles with a heating up step intended to restore the heat in the interior of the CaCO₃ before a new vacuum step begins, is intended to exploit such heat transfer advantage clearly observed in Figure 2. When the heat necessary for calcination is available in the interior of the stone (or in the interior of the bed of solids containing CaCO₃ as it will be demonstrated in another experiment below), there is an extremely fast initial rate of calcination when vacuum is applied (marked by an initial fast drop in temperature as shown in Figure 2). The molar calcination conversion achievable with such single vacuum step is modest (between 1-10%) but several repetitions of the heating-vacuum process could lead should lead to complete calcination. Figures 3-5 experimentally demonstrate the viability of such approach with stones similar to the ones used in Figure 2.

Figure 3 is an example of a multicycle calcination experiment with a similar limestone rock as in Figure 2, that illustrates the advantages of the present invention when applying multicycle heating-vacuum cycles. In the first vacuum cycle, taking place between 175-185 min, the application of vacuum pressure to the reactor translates into a fast drop of temperature in the stone, particularly intense in the centre of the stone (T35 mm) but even noticeable in the external surface (Tsurface). The rate of calcination is faster as vacuum reaches 0.05-0.2 atm. Equilibrium temperatures under such partial pressure of CO₂ are 718 to 795 °C respectively. When the vacuum is interrupted after 10 minutes, the temperatures start to rise (from minute 185 in the first cycle) back towards 900ºC, which is the set point temperature in the oven surrounding the reactor. In this particular experimental set up, the heating up time to approach the set point of 900ºC has been 60 minutes (no calcination takes place during such heating up process because the device is gas tight and no CO₂ is allowed to escape). It will be evident to the skilled in the art that such heating up time would be largely reduced in the more favourable conditions for heat transfer present in industrial limestone shaft kilns or calcium looping processes, where combustion and high flow rates of gases in the vicinity of a stone or particle will increase the heat transfer coefficients between the CaCO₃ containing particles and the gas.

The experiment of Figure 3 continued during 19 cycles until the complete calcination of the stone was achieved. This is presented in Figure 4, where we plot the evolution of the minimum temperature achieved in each vacuum cycle as a function of the vacuum cycle number, for different positions in the stone. As can be seen, experimental errors do not allow for a clear distinction between the external surface temperature and temperature measured by the thermocouple in the hole drilled 10 mm from the surface. However, a substantial drop in temperature with the number of cycles is detected in the centre of the stone (T25mm and T35mm). This is in part due to the decreasing mass of the stone as it increases in calcination degree (or molar conversion of CaCO₃ to CaO), that will result in a lower amount of sensitive heat being available to drive calcination during the next vacuum cycle. There may be also kinetic factors, as a faster overall kinetics of calcination of the stone (and hence a faster rate of cooling) may be possible as we increase the porosity of the stone with an increased conversion of the stone to CaO with the number of vacuum cycles. In any case, as the stone approaches full conversion, the drop in temperature in each vacuum cycle decreases, to become zero when there is no longer CaCO₃ in the stone (i.e. in cycle 19 for this particular stone and conditions).

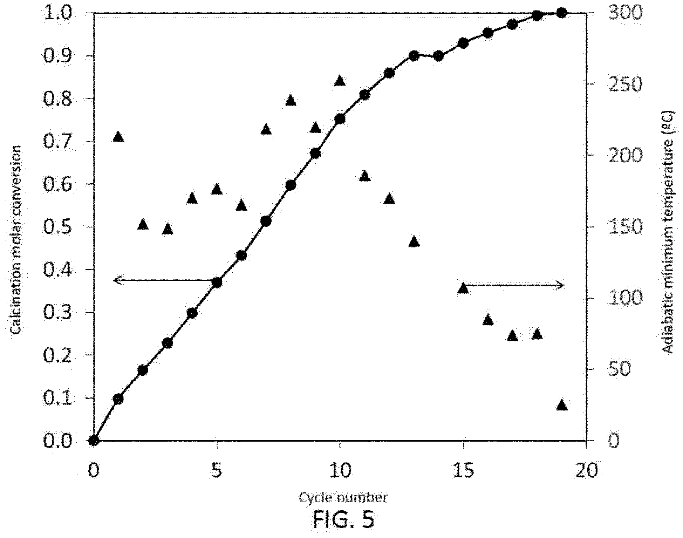

Figure 5 represents the evolution of the molar conversion of CaCO₃ to CaO as a function of number of heating-up and vacuum cycles in the same conditions as in Figure 3 and 4. The linear tendency between the two variables when conversion is below 0.8 is an indication of a heat-transfer controlled calcination process: it is the quantity of sensitive heat available during vacuum step what determines the degree of calcination in each cycle. Such quantity of energy can be estimated in the linear part of the figure (i.e. up to conversion 0.8 in cycle 11 in this example) taking into account that the calcination of 1 kg of CaCO₃ requires about 1670 kJ/kg at 900ºC (or 1336 kJ/kg to reach conversion 0.8). Therefore, in this experiment there is an average of 111 kJ/kg provided to the calcining solids before the onset of a new vacuum cycle. We have represented the adiabatic temperatures associated to each observed increment of calcination conversion on the right hand axis of Figure 5. Unfortunately, it is evident that this particular experimental set up did not allow the detection with the thermocouples of the of adiabatic temperatures associated to the decrease in carbonate conversion in each cycle, mainly because conduction of heat towards the stone from the oven (at about 900ºC) is sufficiently fast to moderate the temperature drop in the interior of the stone when vacuum is applied. On the other hand, it is evident from the state of the art of calcination kinetics of limestone, that calcination rate of CaCO₃ would become too slow if the temperature dropped below 700ºC.

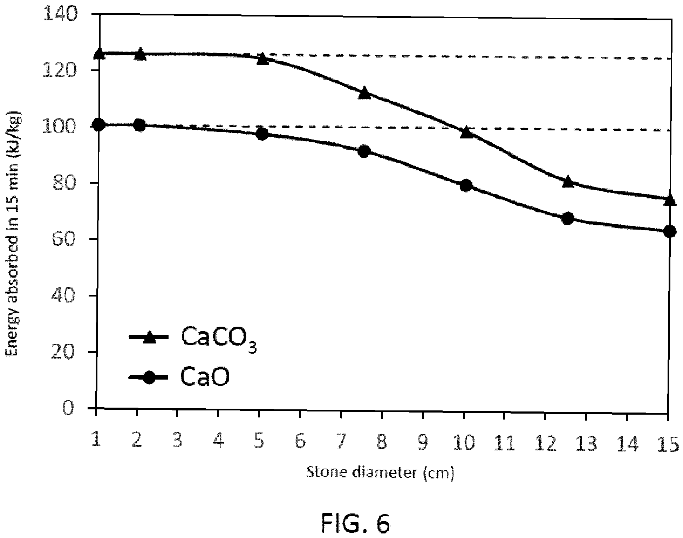

Modelling of dynamic heat transfer phenomena in spherical stones of CaCO₃ or CaO also help to support the chosen conditions and times in the two steps that characterise this invention. This is particularly important to elucidate conditions to avoid excessive calcination of CaCO₃ during the heating up step i). Figure 6 shows a set of solutions of the dynamic heat transfer of a heating sphere of CaO or CaCO₃ of varying diameters. The model is used in this case to calculate how much heat is absorbed by a certain mass of CaCO₃ (line with triangles) or lime (line with solid dots) in a reasonable time when the starting temperature of the solids is 800ºC, the gas environment of the stone is 900ºC and the heat transfer coefficient between gas and the external surface of the particles or stones is 175 W/m^{2º}C. Both the heating time under combustion (15 min) and the heat transfer parameters are typical in existing industrial lime kilns. Bulk density, conductivity and heat capacity of CaCO₃ are taken as 2600 kg/m³, 2.3W/mK and 1275 J/kgK respectively and 1300 kg/m³, 0.7 W/mK and 965 J/kgK. Dashed lines in the figure correspond to the maximum energy absorbed by the particles when the thermal equilibrium is achieved (i.e. when the full particle has reached the 900º of the environment). As can be seen, gas environments characteristic of rather mild combustion conditions and temperatures (850º-950ºC) are sufficient to provide the necessary heat to the solids (80-120 kJ/kg interval is consistent with the 111 kJ/kg in the experiment of Figure 3-4) before the onset of a new vacuum cycle, using combustion time periods (t1 =5-20 min) and stone diameters >3 cm that are standard in existing lime kilns. Due to the increasing limitations by heat transfer within the stone, it will be evident to the skilled in the art that stones of very large diameters (up to 15 cm in this Figure) would require longer number of combustion-vacuum cycles than the stone used in Figure 3-4 to achieve full conversion (because only 60-80 kJ/kg of energy are transferred per cycle instead of 100-120 kJ/kg in these particular set of conditions). In contrast, Figure 6 shows that operating the process with particles containing CaCO₃ with smaller diameters (<1 cm) and lower CaCO₃ contents (for example, CaO sorbent particles in calcium looping processes for CO₂ capture, that have typical diameters of less than 5-10 mm and maximum molar carbonate contents of 0.03-0.1) would ensure that there are virtually no heat transfer limitations at particle scale. Therefore, the optimum target for the final temperature in step i) will depend on particle size and level of carbonate in the solids, but it should remain between 800-900ºC in view of all these results and simulations. For large stones as in lime kilns, flame combustion temperature or flue gases in the vicinity of the stone only require 50-100ºC over the target heating temperature to ensure the transfer of the necessary energy to the stones.

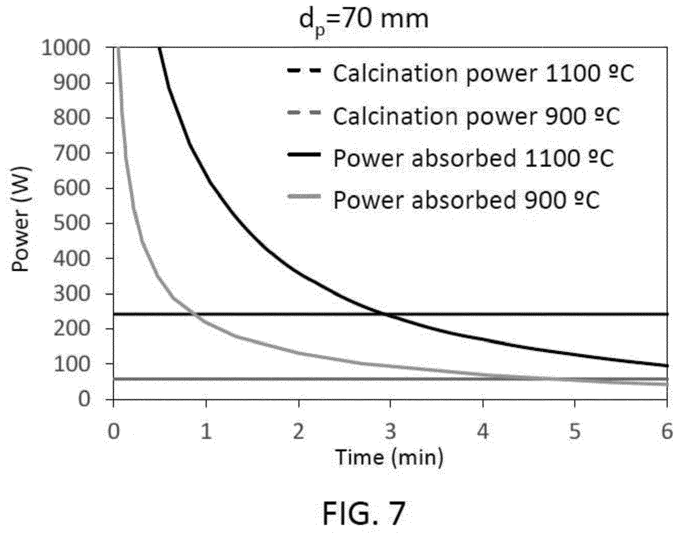

Figure 7 is another example of heat transfer model predictions to illustrate how the energy supplied to the stones during the heating up step i) by combustion will mainly go to heat up the stones and not to calcine them. The figure plots the thermal power (solid black and grey lines) flowing to a spherical stone of CaCO₃ of 70mm diameter, cooled down to 800ºC and with a step change to 900ºC (black lines) or to 1100ºC (grey lines) imposed at the exterior surface of the stone at time zero. The dashed horizontal lines indicate the power required to promote the shrinking rate of the stone as given by Furnas calcination model at 900ºC (black) and 1100ºC (grey). The crossing between the two lines at time would represent a point in which the power transferred towards the interior would equal the power required to shrink the stone according to Furnas calcination model. As can be seen, the stones are able to absorb energy and heat up well before such points are reached in both cases. Similar simulations with other temperatures and stone diameters provided similar qualitative results, albeit at different crossing times of the two lines. Such results indicate that, when combined with experimental observations of relevant calcination rates under vacuum at temperatures as low as 800ºC, smaller stones will likely progress in their calcination conversions at lower temperatures in kilns applying the method of this invention, because heat transfer towards such stones at those low temperatures is fast and effective, while shrinking rates predicted for calcination are negligible.

The experimental proof of the previous statement is implicit in Figure 8, that shows the results from one experiment with a sequence of 14 heating-vacuum cycles similar to those in Figure 3, but applied in this case to a batch of carbonated particles of CaO with an average diameter of 4 mm. Fast calcination under vacuum is detected even at temperatures as low as 800ºC. These particles also have a low content of CaCO₃ (0.034 is the average carbonation conversion or carbonate content in this experiment, as marked by the white dots of Figure 8 in the molar Ca conversion scale of the right). Due to the low initial carbonate content, the material is fully calcined after the first vacuum calcination step and the cooling due to calcination is interrupted at about 800ºC. To carry out a new cycle of heating and vacuum, pure CO₂ is allowed into the reactor to carbonate the material back to its maximum CO₂ carrying capacity of 0.034, which is consistent with the modest but highly reversible CaO materials in state-of-the-art calcium looping reactors. Since the particles are too small to track individually their temperatures in this set up, a bed of 185g of CaO particles is used, surrounded by a low conductivity silica-wool material of about 5 cm thickness to be able to detect drops in temperature when the vacuum part of the cycle is applied. The application of a vacuum swing, from 1.2 atm to 0.05 atm, is represented by the solid line (pressure scale in the right-hand side). The temperature measured in the interior of the bed is represented with a dashed line (Temperature scale on the left hand axis). The maximum temperature achieved in the bed after heating up step i) is in this case 860ºC while the minimum approaches 800ºC. The temperature swing recorded in the bed of solids in this experiment is about 60ºC, when the adiabatic temperature linked to the average measured changes in carbonation or calcinations conversions of 0.034 should be 124ºC. The discrepancy is consistent in this case to the conduction o heat in the thermocouple, because heat transfer from the oven to the centre of the bed is impeded by the insulating layer of silica wool. Despite the experimental errors when measuring such small increments in carbonate conversion (or calcination conversion), it was possible to confirm by analysis of the solids at the end of the experiment the average 0.034 carbonate conversion of the solids that compares well with the average of the molar Ca conversions (between carbonation and calcination) plotted in Figure 8. These experimental results confirm that the carbonation-calcination cycling is highly and truly reversible when operating with such low values of incremental conversion of CaO to CaCO₃ during carbonation and CaCO₃ to CaO during calcination. Unlike other calcium looping processes in the state of the art, the method of this invention can operate with such low increments of conversion because the combustion step used for heating up the bed of solids can connect the temperature window of carbonation (600-700ºC) in calcium looping systems, with the temperature window of calcination (800º-900ºC), as will be demonstrated in the examples below.

The previous experimental results, and the modelling carried out to interpret them, demonstrates that in reasonable heating up times (5-20 minutes) it is possible to transfer the necessary energy (50-150 kJ/kg) to solids containing CaCO₃ to bring them back to an average temperature of 800-900ºC, necessary to re-initiate a new vacuum cycle step, where temperatures will drop between 30-200ºC (causing a decrease of molar CaCO₃ content between 0.01 and 0.07) in the solids. Calcination rates under vacuum step ii) are sufficiently fast to complete an incremental calcination molar conversion of 0.01 and 0.07 in just 5-20 minutes of vacuum stage, at vacuum pressures between 0.05-0.5 atm. The skilled in the art will note that reducing vacuum pressure allows larger drops in temperature during calcination, and a reduced number of cycles of steps i) and ii), at the expense of a higher energy consumption to generate such low vacuum pressure. Moderate vacuum pressure demand for higher temperatures of heating of the carbonated solids and/or higher number of vacuum cycles, as the drop in temperature of the solids will be limited by the equilibrium temperature imposed by the vacuum pressure (for example, for 0.5 atm of vacuum, it will not be possible to lower the temperature below 850ºC during vacuum as this is the equilibrium temperature of CO₂ on CaO at such partial pressure of CO₂).

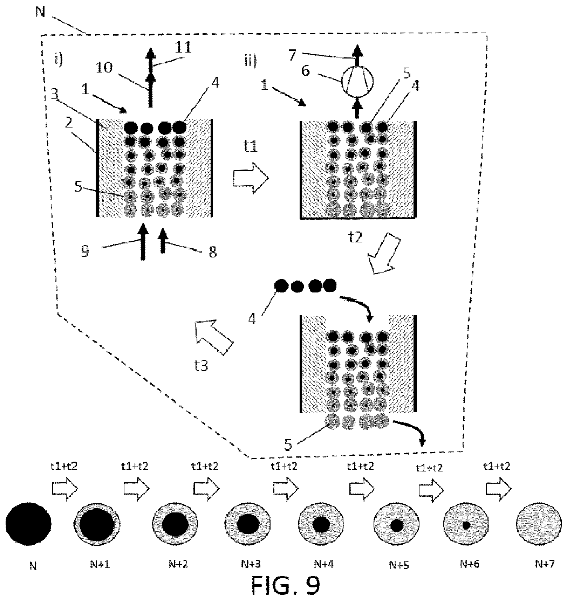

Taking the previous constrains into account, a preferred embodiment of the process of this invention allows the calcination in continuous mode of a flow of limestone (4) and the extraction of an equivalent volumetric flow of lime (5). The schematic of each single cycle N of the process is presented in Figure 9. In this case, the vessel in the process (1) contains a multiplicity of particles arranged in a packed bed form. In the example of Figure 9, batches of limestone (4) are periodically charged to the top of the vessel after a vacuum stage ii) and a volumetrically equivalent batch of fully calcined material is extracted at the bottom of the bed. This allows the preheating of the limestone solids to the temperatures required at the beginning of step i) with the sensitive heat of the combustion flue gases (10 and 11) produced during the step i), and the preheating of the large flow of air or other comburent mix (9) in contact with the high temperature CaO leaving the thermally insulated vessel (1). Each cycle N will last the sum of the times under the combustion step and the vacuum step (t1+t2), plus the time required (t3) to replace a batch of limestone (4) and extract the CaO product (5). The time t3 can be made zero if such operation of discharge of solids is carried out simultaneously with the combustion or heating up step i).

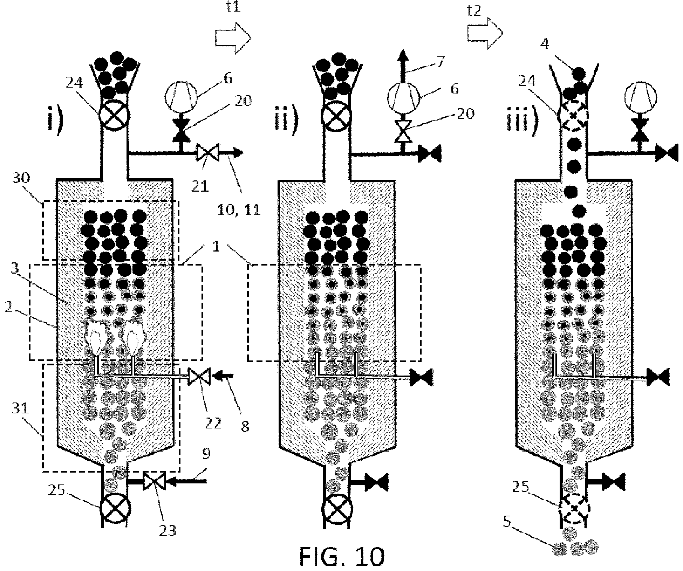

Figure 10 represents in schematic form a full system to carry out the process of this invention in a limestone shaft kiln. The kiln includes a refractory (3) lined external wall (2) to sustain vaccum pressure in the interior of the bed of stones, lock-hoppers connected to feeding valves (24) and extraction valves (25) of solids and a number of gas switching valves (20-23) installed in all inlet and outlet gas pipes. At least one of the pipes (usually the pipe of flue gases (10)) has a vacuum switch valve (20) connected to a vacuum pump or blower. Such kiln will typically contain a preheating zone (30) for limestone (4) at the top of the kiln and an air preheating section (31) at the bottom of the kiln that cools lime product (5) with air or other comburent mix (9). The process requires a moving bed step iii) after the vacuum step ii) in which the bed of solids moves downwards in the kiln by extracting a batch of CaO product (5) at the bottom of the air preheating section of the kiln while charging a batch of limestone (4) at the top of the limestone preheating section of the kiln. The process operates with a sequence of operation periods characterized by the positions of the switching valves as indicated in Figure 10: a period i) lasting t1=5-20 minutes with (21), (22) and (23) opened and (20), (24) and (25) closed, and a period ii) lasting t2 between 5 and 20 minutes with all valves closed except (20), and a period of all valves closed except the solid valves (24) and (25).

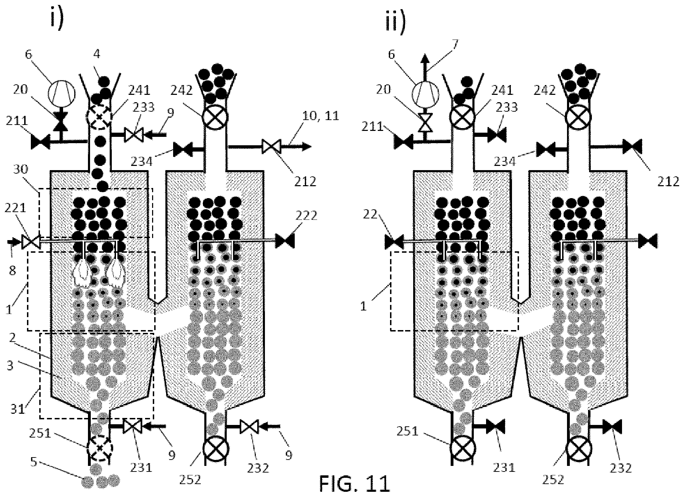

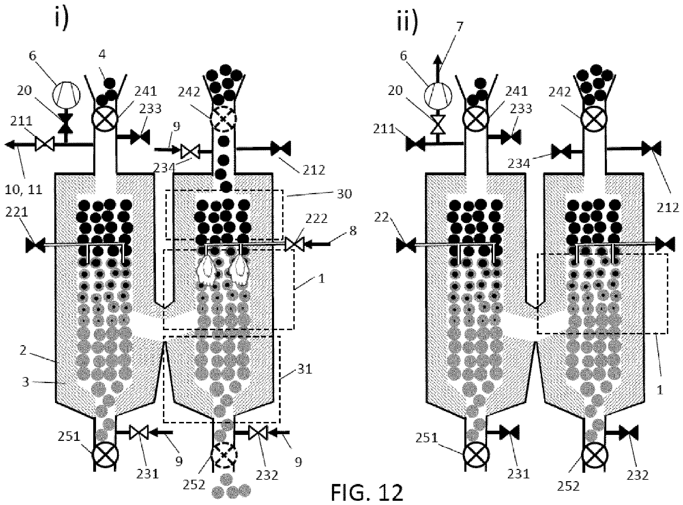

Figure 11-12 is a schematic representation of a double shaft kiln operating with the characteristic process steps of this invention. The number of the valves and other minimum mechanical elements have changed respect to the single shaft of Figure 10 but the process is the same. For simplicity, we have also chosen in Figures 11-12 to use a variant of Figure 9, by arranging the charge and discharge of solids iii) during the step i), as a system of rotary valves (241 in Figure 11 and 242 in Figure 12) and lockhoppers can prevent the scape of gases trough the solid feeding and extraction lines while burning a fuel in one of shafts during step i). The process operates with a sequence of operation periods characterized by the positions of the switching valves as indicated in Figure 11: a period i) lasting t1=5-20 minutes with (231) and (233) opened to allow combustion of the fuel (8) by opening the valve (221) and allowing air (9) to enter the left shaft while the right shaft operates in regenerative mode with (232) open for additional air (9) and the valve (212) opened for flue gases (10, 11). (20), (211), (234), (242) and (252) are closed. The combustion stage i) in the left shaft only is followed by and a period ii) lasting t2 between 5 and 20 minutes with all valves closed except (20). Figure 12 shows the next cycle of steps i) and ii). Following the known operating principles of double shaft kilns to reach higher thermal efficiencies, the new combustion cycle i) involves the burning of the fuel (8) in the shaft located in the right hand side of the kiln, with valves (242), (252), (232), (222), (234) opened and (20), (241), (233), (251), (212) closed.

It must be noted that kilns of Figure 10-12 are able to recover CO₂ (7) from the decompostion of CaCO₃ but it is not able to recover the CO₂ evolved during the combustion of the carbon contained in the fuel (8). Such CO₂ (11) is emitted mixed with the nitrogen rich flue gases (10) evolved during the combustion of the fuel (8) with air or other comburent mix (9) (unless such comburent mix is pure O₂ and CO₂). State of the art of metal fuel combustion or chemical looping combustion process offer a solution o prevent the emission of the CO₂ evolved during combustion of the fuel (8), while keeping the characteristics of step i) (i.e. the use of the combustion of a fuel to re-heat up the solids cooled during a previous vacuum stage) and avoiding the use of pure O₂ (that may require requires additional costly and energy consuming processes).

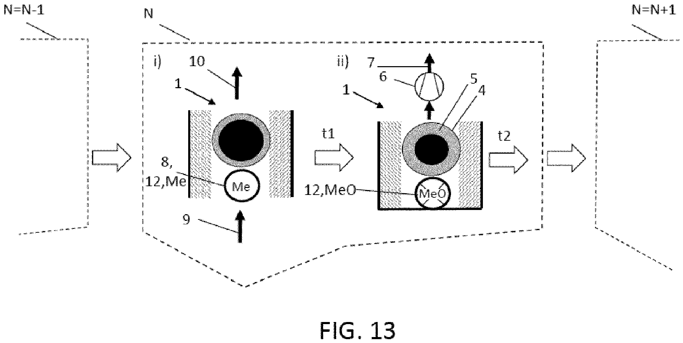

Figure 13 shows a preferred embodiment of the process to avoid the CO₂ emission in the flue gases (10) by substituting the fuel (8) for a renewable solid fuel (a metal with the generic symbol Me) that is present in the bed as a second solid (12) or support of Me. Such materials are known to be in the state of the art of oxygen carriers for chemical looping combustion as more stable and reactive when supported on a ceramic support. The second solid (12) containing Me is mixed with the solids containing CaCO₃ in the packed bed. For simplicity in Figure 13, the change in oxidation state of the Me contained in the second solid is represented in the step ii) as a cross behind the symbol MeO. Mechanical separation of the oxidised form of (12) from the calcined product (5) can be arranged as these material can be manufactured with suitable differences in particle size and density to allow separation. This is not represented in the Figure 13 for simplicity. The metal Me is preferibly Fe, Cu or Ni.

The application of the process of this invention to the calcination of limestone in a shaft kilns is non-restrictive. As known from the state of ther art, there are a number of CO₂ capture processes by calcium looping requiring calcination of carbonated solids (formed during the carbonation of CaO with CO₂ in a flue gas or fuel gas), to generate a pure stream of CO₂. These processes can benefit from the sequence of heating-vacuum steps for calcination disclosed in this invention. In particular, there is a familly of calcium looping processes that include cyclic operations in adiabatic packed beds (1) of solids (4-5) that do not move in the bed, and that rely on the capture of CO₂ by the reversible carbonation of CaO (5) to form solids containing CaCO₃ (4), followed by the calcination of the formed solids containing CaCO₃ (4) to produce concentrated CO₂ (7) and regenerate the CaO sorbent (5). Example of such processes are sorption enhanced steam reforming process of natural gas and other hydrocarbons (including biogas) using CaO as a sorbent to displace reforming reactions towards hydrogen production. Also, sorption enhanced water gas shift using CaO as sorbent to displace the water gas shift equilibrium towards the production of H₂.

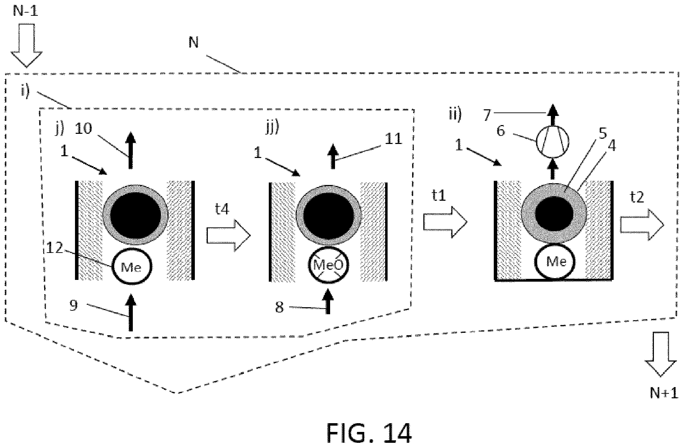

In order to understand the relevance of this invention for the technical viability of such calcium looping processes, it is important to highlight here these known elements of the state of art:
- It has been widely demostrated that the capability of CaO from natural sources as a fully reversible CO₂ sorbent is limited to a maximum calcium conversion to CaCO₃ of just 0.03 to 0.1. Therefore, the necessary mixing of Ca-based solids with the second solid containing the reforming or water gas shift catalyst and its support brings down the effective weight content of active CaO in the bed to just 1-3%w of the total bed, with the remaining 97-99% of the bed mass being a thermal ballast during the carbonation or calcination reaction stages in the calcium looping process.
- The optimum temperature window for fast and efective carbonation of CaO is usually 600-700ºC (at atmospheric pressure) and the fast and effective calcination of CaCO₃ requires temperatures approaching 900ºC under CO₂-rich atmospheres, and starting temperatures between 800-900ºC for vacuum calcination cycles.
It should be evident to the skilled in the art that for these realistic materials and conditions it is not possible to established the desired temperature swing between carbonation and calcination using only the energy involved in carbonation and calcination reactions. The lack of sufficient thermal energy for calcination worsens when considering heat losses and the heat balance affecting incoming low temperature gas reactants and high temperature gas products. Therefore, the method of this invention is a solution to close the heat balances and the temperature gaps between carbonation and calcination temperature conditions in calcium looping processes. This will make them technically viable without the need of high performance, high activity Ca-materials, that have not yet become commercially available after decades of worldwide research work.
In view of all experimental results and discussions above, a preferred embodiment of this invention (see Figure 14) is characterised by conducting the combustion step i), which is necessary to bring the temperature of the the carbonated solids to a suitable temperature for calcination during the vacuum stage, by following chemical looping combustion principles to burn the fuel (8) with air (9) using a solid oxygen carrier (MeO/Me). The combustion in the bed of carbonated solids is carried out in two separate sub-steps:
j) a first sub-step lasting t4 (<t1) where the metal, Me, contained in the second solid (12) is oxidised to MeO by reacting with air (9) and releasing a nitrogen-rich flue gas (10)
jj) a second sub-step lasting t1-t4 where the MeO produced in j) is reduced back to Me while oxidising the fuel 8 to the combustion products rich in CO₂ (11).

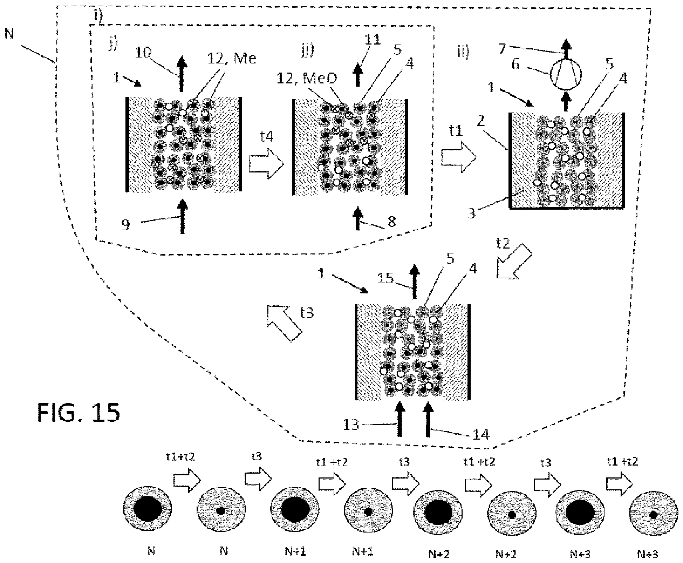

As indicated in Figure 15, and following the teachings of the state of the art of chemical looping combustion in packed beds, the oxidation reaction of Me (white circles) to MeO (marked with a cross on the white circles) will progress in neat reaction fronts moving upwards as the process step j) advances with time. It is well known from similar processes that this oxidation stage can be a very brief reaction step (t4 between 1-3 minutes) that will leave the whole bed of solids hotter behind the oxidation reaction front, depending on the nature and mass content of the metal Me oxidising to MeO (see Examples 2 and 3 below). Therefore, the process of Figure 15 follows the sequence of Figure 1 and Figure 8 in the sense that a partial calcination of CaCO₃ is taking place in each combustion-vacuum cycle (or in other words, a drop of 0.01 to 0.1 in CaCO₃ molar fraction of the Ca-sorbent in the bed after t1+t2, with t1 being the sum of t4 and (t1-t4)). For simplicity, the carbonation step and any other reaction or bed conditioning step taking place in the bed of solids is assumed to last t3, as this will reversibly bring the bed to its initial status to re-start a new cycle in the calcium looping process. Such carbonation reaction stage will take place by feeding a carbon containing gas (13) to the packed bed of solids. A carbonation reaction front will develop in the bed during such process when the gas containing CO₂ meets a layer of CaO not yet carbonated to CaCO₃. Such carbon containing gas can be a flue gas containing CO₂ or a fossil fuel gas or biogas that can react with steam (14) to generate CO₂ during reforming and water gas shift reactions. In both cases (i.e. sorption enhanced reforming or sorption enhanced water gas shift), and as noted above, there will be a modest increase in the molar conversion of CaO to CaCO₃ between 0.01 and 0.1 when using low cost state of the art CaO materials from natural limestone. It will therefore become evident to the skilled in the art that the application of the sequence i) to ii), with i) subdivided in j) and jj) will allow to connect the temperature gap between the desired reaction steps in these calcium looping processes, as discussed in Examples 2 and 3 below.

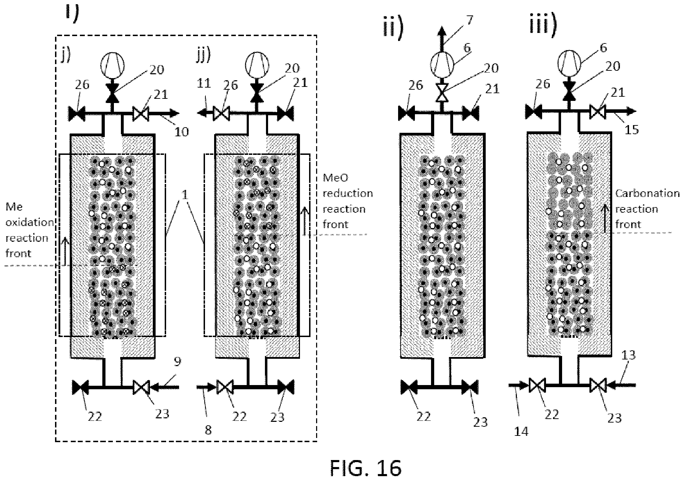

Examples 2 and 3 are provided below by using a preferred embodiment of this invention as represented in Figure 16. This is characterized by the combustion taking place in (1) during heating up step being an indirect combustion of a fuel (8) with air (9) by exploiting the dual role of Ni and Cu as oxygen carriers for the indirect combustion of a fuel (8) with air (9) in step i) and as catalysts for sorption enhanced reactions.

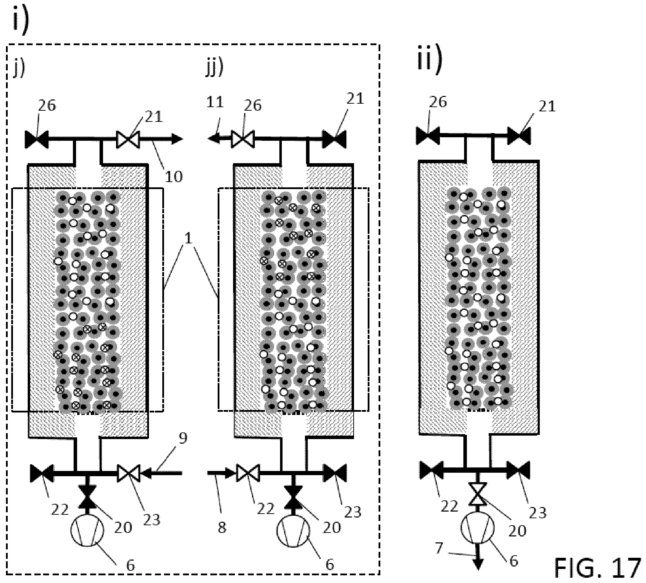

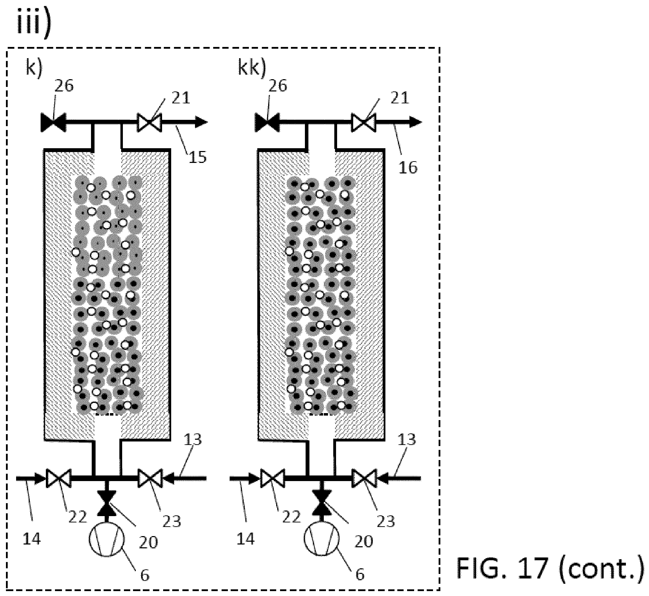

A process variant in previous reforming processes, that translates into higher yields of hydrogen, involves the partial reforming of the natural gas with steam using the sensitive heat contained in the high temperature bed of solids resulting after the carbonation step, as explained in an example below using Figure 17.

For conciseness, detail examples of the application of this invention to other calcium-enhanced reactions for biogas or syngas derived from biomass have also been omitted. Such processes can be considered variants where the origin of the solids containing CaCO₃ are the calcium enhanced reactions forming CaCO₃. All these processes will benefit from the solution provided in this invention to calcine said CaCO₃ while producing pure CO₂ and regenerating the CaO for a new cycle of enhanced calcium enhanced reactions.

In all previous embodiments of the process, the skilled in the art will introduce short additional gas purging/rinsing steps for security and gas purity reasons, for example using steam or nitrogen as inert gases.

One particular additional step valid for all embodiments disclosed here is characterised by the introduction of an additional gas rejection step by which a gas volume of about 1-3 times of the void volume of gas in the solids packed bed (1) is discharged at the beginning of the vacuum period ii).This action will avoid the mixing of the small mass of non-CO₂ gases present in the interstices of the bed of solids at the beginnngin of step ii) with the pure CO₂ evolved during the vacuum calcination of CaCO₃.

### EXAMPLES

Mass and energy balances are solved in the three examples below to illustrate the application of the calcination method disclosed in this invention to calcine solids containing CaCO₃ into CaO and a pure stream of CO₂ in a shaft lime kiln (Example 1), a calcium looping process for calcium-enhanced water gas shift (CASOH) catalysed by Cu to produce H₂ from Blast Furnace Gases and pure CO₂ (Example 2), and a calcium looping process for sorption enhanced reforming process catalysed by Ni to produce H₂ from natural gas and pure CO₂ (Example 3). For simplicity and transparency, the following thermodynamic parameters are assumed to be constant: enthalpy of carbonation and calcination=170 kJ/mol Ca; enthalpy of WGS=-34 kJ/mol CO, enthalpy of steam methane reforming=190 kJ/mol CH₄, enthalpy of Cu oxidation=-145 kJ/molCu, enthalpy of CuO reduction= -54.5 kJ/molCu with CH₄, -100 kJ/molCu with H₂, -140 kJ/molCu with CO, enthalpy of blast furnace gas combustion= 2600 kJ/kg, enthalpy of methane combustion= 50000 kJ/kg, heat capacity of all solids=0.8 kJ/kgK; heat capacity of blast furnace gas=1.35 kJ/kgK, heat capacity of H₂/N₂ product gas from SEWGS=1.6 kJ/kgK, heat capacity of CH₄=4.1 kJ/kgK, heat capacity of H₂O=2.2 kJ/kgK and heat capacity of the rest of gases=1 kJ/kgK. The displacement of reaction and heat transfer fronts are calculated assuming infinite reaction rates and infinite solid-gas heat transfer rates. The skilled in the art will be able to refine the calculations provided below and adapt them to other conditions. The examples are therefore only illustrative and non-restrictive.

### EXAMPLE 1 (Lime vertical shaft kiln)

Figure 10 is used as reference. This example is calculated to show the application of the method to a lime single shaft kiln designed to produce an arbitrary target flow of 1 kg CO₂/s (7) during the vacuum stage ii), using a time of 10 min duration for the combustion step (t1) and 15 min for the vacuum step (t2). The skilled in the art will adapt this example to double shaft kilns as in Figures 11 and 12. Indeed, the chosen durations of step i) is consistent with typical combustion time periods in state-of-the-art double shaft kilns to achieve similar objectives regarding heat transfer efficiencies between gas and solids etc. We first assume that the efficiency in the capture of CO₂ during vacuum stage ii) is 80% (the remaining CO₂ evolved from calcination is considered to be lost with the flue gases during step i)). This means that there is flow of 1.70 kg/s of limestone (assumed to be pure CaCO₃) entering the kiln. Staged combustion during the heating up step i), (represented by 3 flames at different height in the calcination zone (1) of the kiln) is assumed in the calcination zone. In this example, it is assumed that the feeding of limestone (4) and removal of lime (5) take place only during the combustion step i) (see Figure 10). The complete calcination of the limestone to lime (0.95 kg CaO/s) demands a minimum of 3.0 MJ/kg of CaO, which translates into a minimum average power requirement for calcination of 2.85 MW during whole cycle. In the kiln of this example, if the flow rate of lime is to be maintained, the thermal input must be supplied to the shaft kiln in a shorter time, only during the combustion step i). This means that a thermal input for calcination of 7.12 MW is needed during the step i). In order to solve the energy balances in the limestone and air preheating zones (30 and 31), it is assumed that limestone (4) and oxygen enriched air are fed at a temperature of 20 ºC meanwhile lime (5) and flue gas (11) leave the kiln at 50 ºC. Moreover, a temperature of 950 ºC has been assumed for the gas and solid streams leaving the calcination zone (1). A flow of 0.17 kg/s of methane is therefore calculated to be sufficient to compensate calcination energy requirements, a characteristic value of 10% to account for heat losses, and the sensitive heat leaving in the mass flow outlets of CaO and flue gases. A low excess ratio of 5% and an oxygen concentration of 45%v in the oxygen enriched air (9) have been used in the calculations above.

The assumption of an enriched air with oxygen concentration of 45%v facilitates in this particular example an efficient closure of mass and energy balances in a single shaft kiln, because the flow rate of gases at the exit of the calcination zone contains sufficient energy to preheat the incoming limestone flow to said calcination zone. Assuming, a typical superficial gas velocity of the combustion flue gases of 1.5 m/s in the calcination zone, this yields a cross-section for the kiln of 4.5 m². This translates into an average superficial solid velocity moving downwards in the kiln of 0.0004 m/s during each cycle. Assuming a void fraction not occupied by stones of 0.4, an average density of 2000 kg/m³ for the solids and a total height of 8 m for the calcination zone (1, as in other kilns), a total amount of solids of around 29000 kg can be estimated in this zone of the kiln. This translates into a total residence time of the solids in the calcination zone (1) of 6.2 h. Such long residence time in the calcination zone is within the range of stone residence times in existing kilns and can be tuned by the skilled in the art to adapt it to particle size of the stones and calcination rate parameters of the stone. It is shown below to be sufficient to achieve a calcination degree close to 100% in view of experimental results and modelling simulations as in Figures 2-7.

During each stage under the combustion step i) in the kiln, the previous heat and mass balances indicate that approximately 115 kJ/kg of solids in the calcination zone are absorbed during on average in each combustion step i). After such combustion period is completed, the 15 min of the vacuum step ii) allows for a conversion of CaCO₃ to CaO of 6.9%wt during the vacuum step ii), consistent with the experimental and modelling results presented in Figure 3. Therefore, a minimum total of 12 combustion-vacuum cycles will be required for the stones in the calcination zone to achieve their full calcination. Since each cycle lasts t1+t2=25 minutes, the accumulated time required for the particles to fully calcine is 4.9 h. This calcination time is lower than the residence time of the solids in the calcination zone (estimated to be 6.2 h above). Thus, ensuring the full calcination of the limestone fed into the kiln under these assumptions, that are consistent with the state of the art in existing lime kilns.

For an equivalent single lime shaft kiln with no CO2 capture, operating with the same conditions in the calcination zone, with the same gas and solid flows inlet temperature and heat losses, a maximum thermal input of 3.8 MW can be calculated when using air as comburent, leading to a maximum flow of lime of around 0.84 kg/s. This shows that the method disclosed in this invention to obtain a pure stream of 1kg/s of CO₂, could be implemented in existing shaft kilns without reducing the lime production capacity, when oxygen enriched air is used a comburent and the kiln is retrofitted with additional equipment required for vacuum generation, reinforced walls, lock-hoppers for solid handling minimizing air ingress during vacuum, switching valves etc.

### EXAMPLE 2 (CASOH process with vacuum calcination)

The method of this invention is applied to a calcium-enhanced water gas shift process (CASOH) to treat Blast Furnace Gas (BFG) from a steel mill plant and generate a H₂-rich gas while carbonating CaO to CaCO₃ in a packed bed. The process is carried out in a system composed of several adiabatic packed-bed reactors operating in parallel in different reaction stages, to allow the continuous treatment of gas streams. The calcination method of this invention recovers pure CO₂ when calcining the CaCO₃ formed during carbonation of CaO taking place in the CASOH stage. Figure 16 is used as a reference. As in the previous example, a flow of 1kg/s of pure CO₂ (7) the vacuum stage ii) is assumed as a reference for calculations. It is also assumed that BFG is composed of 23%v CO, 24%CO₂, 5%H₂ and 48%N₂ and that the CaO-based material contains 3%w of active CaO. In this particular example, two Cu-based additional materials are also present in the bed: one with 25%w and 5%w of Cu respectively, for reasons explained below. These material compositions and supports are available in the state of the art of chemical looping combustion and water gas shift catalytic processes. The particle diameter for all the solids is assumed to be 4 mm as a compromise to moderate pressure drop in the bed of solids while maintaining mass transfer resistances to the progress of reaction, consistent with similar state of the art and with the results of Figure 8. For the calculations, it has been assumed that the thermally insulated packed-bed reactors (1) is 10 m long, with 2.2 m of inner diameter and a bed density of 1500 kg/m³.

The first half of the reactor contains a mixture of solids with a molar ratio of active Cu/CaO components of 0.85 when combining the CaO sorbent with the catalyst with 25%w of Cu. This means 2.7%w of active CaO, 87.1%w of inert CaO, 2.6%w of Cu and 7.6%w of Cu-catalyst support. The second half of the reactor contains a mixture of solids with an active Cu/CaO molar ratio of 0.16 combining the CaO sorbent with the catalyst with 5%w of Cu. This means 2.7%w of active CaO, 87.1%w of inert CaO, 0.5%w of Cu and 9.7%w of Cu-catalyst support. This distribution of solids for this particular example will facilitate the operation with a uniform temperature during the heating up by the chemical looping combustion step i), as explained below. The skilled in the art of chemical looping combustion in packed beds could identify other methods in the state of the art to handle the generation of axial temperature distributions in the bed, by introducing additional solids to the bed acting as thermal ballast, by using gas recycles or by introducing additional regenerative heat exchangers or exploiting the excess of thermal energy in high temperature packed beds to drive other endothermic reactions (see Example 3 below).

The CASOH process works cyclically, and the description can therefore be initiated from any stage. Since the application of the method of this invention (steps i) and ii) in Figure 16) requires the presence in the thermally insulated vessels of a packed bed of solids containing CaCO₃, we start describing the step involving the generation of CaCO₃ in the bed (CASOH stage represented as iii) in Figure 15), which is part of the state of the art. When such a calcium- enhance water gas shift reaction starts, the bed is loaded with about 57000 kg of solids with 2.7%w of active CaO, 87.1%w of inert CaO, 1.5%w of Cu and 8.7%w of inert support. Moreover, the solids in the bed are initially at 725ºC, as a result of a previous calcination stage (see below). To carry out the CASOH stage, with valves 21-23 opened, a flow (13) of 2.3 kg/s of BFG (i.e., 6 MW_{LHV} of thermal input) is mixed with 0.63 kg/s of steam (14) to obtain a steam-to-CO molar ratio of 2 in the feed. This gaseous mixture is fed into the reactor at a low temperature of 125ºC (to avoid carbon deposition and metal dusting phenomena) and 1.3 bar (to overcome bed and downstream valves pressure drop). This temperature allows first a very fast reaction of CO with H₂O to form CO₂ and H₂ catalysed by the Cu-based solids. CO₂ reacts with active CaO to form CaCO₃ as soon as it is produced, which shifts the water gas shift equilibrium towards a higher production of H₂. The change in temperature in the reaction fronts and the velocity at which both reaction and heat exchange fronts advance through the packed beds are calculated assuming sharp reaction fronts and negligible resistance to mass and heat transfer during the operation. According to that, a slight increase of 8ºC is calculated in the bottom part of the bed that is already carbonated (i.e., where there is no enhanced effect phenomena because CaCO₃ has been formed already), due to the exothermic water gas shift reaction catalysed by Cu, that is assumed to reach equilibrium conditions in the calculations. Such water gas shift equilibrium predicts a CO conversion of about 80%. When such gases reach the region containing active CaO solids, the exothermic carbonation occurs in a sharp carbonation front and the carbonation front achieves a maximum temperature of 820ºC. The low content of active CaO in the bed makes the carbonation front moves forward fast, leaving behind the carbonated solids at 820ºC, while the product gas (15) (1.55 kg/s composed of 26.2%v H₂, 0.6%v CO, 4.3%v CO₂,46.1%v N₂ and 22.8%v H₂O) is discharged at 725ºC (i.e., the initial temperature the packed bed). A maximum gas velocity of 2 m/s is calculated in these conditions, which involves a pressure drop along the bed below 0.3 bar and a residence time of the gas inside the reactor of about 5 s, which should allow the water gas shift equilibrium to be achieved. After approximately 15 minutes of operation in these conditions, the active CaO approaches total carbonation and the packed bed is left with about 49% of the solids at 733 ºC and the remaining 51% at 820ºC as a result of the advance of the heat exchange front resulting from the carbonation reaction. This is the point from which the solution provided in this invention allows a regeneration of the CaO by calcination of CaCO₃ formed while producing pure CO₂.

As indicated in Figure 16, the method of this invention for this example starts with the heating up of the bed of solids containing CaCO₃ by combustion of a fuel (we use also BFG for this purpose but other fuel gases would be feasible for the heating up step). The combustion of a fuel gas in step i), is divided into two sub-stages: j) and jj). In the substage j), the oxidation of the Cu-based solids to CuO is carried out with air (9). A flow of 3.16 kg/s of air at 5 bar and preheated at 300 ºC fed into the packed bed allows the complete oxidation of the Cu-based solids in only 5 minutes. Because of the low content of Cu in the reactor as noted above, the oxidation front advances very fast and the generated heat is left behind, heating the bed of solids with the energy released by Cu oxidising to CuO. The high exothermicity of the Cu oxidation reaction and the different contents in Cu selected in the bottom part and in the top part of the bed, gives as a result an increase in temperature in the first half of the packed bed of about 51ºC, while and 9ºC in the second top half of the bed. The high temperature achieved in the oxidation front (i.e., 830ºC) ensures the complete conversion of the oxygen, giving as a result an outlet flow (10) of 1.82 kg/s basically composed of nitrogen, which is discharged at 820 ºC. This mild combustion temperature, together with the chosen operating pressure (i.e. 5 bar) limits the losses of CO₂ by calcination during this sub-stage to only 7% of the carbonate (note that the maximum CO₂ partial pressure in the gas at the exit is given by the equilibrium of CO₂ on CaO at 830ºC which is 0.35 bar). Once the Cu has been totally oxidized, the bed is divided into three zones at different temperature. According to the advance of both oxidation and heat exchange fronts at different velocities estimated with state-of-the-art model referred above. Less than 3% of the bed (located close to the reactor inlet) is left at 300 ºC, around 46% at 783ºC and 52% at 830ºC. The next stage jj), is to complete the chemical looping combustion of a BFG fuel gas flow (8) with air (9). This consists of reducing the CuO solids with the CO and H₂ contained in BFG. In this case, the operation is carried out with a flow preheated at 300 ºC, of 1.7 kg/s of BFG (i.e. 4.4 MW_{LHV} of thermal input), so that duration of the stage i) is identical to the duration of the CASOH stage iii). During this stage, a flow of 1.96 kg/s composed of 47%v CO₂, 48%v N₂ and 5%v H₂O is discharged at 819ºC. During the reduction of CuO, the reaction front moves forward fast and the heat released during the CuO reduction is dedicated to increase the temperature of the solids left upwards. For these operating conditions, the increase in temperature in the bottom haft of the reactor is calculated to be 56ºC and 10ºC in the top half. Once the CuO has been completely reduced to Cu, the packed bed is left at a uniform temperature of 840 ºC, with the exception of a small fraction of 5%w located at the reactor inlet, which is at the temperature of the inlet BFG (i.e 300 ºC).

Following the method of this invention, the next step involves vacuum stage ii) in which vacuum pressure (0.05 atm) is applied to extract pure CO₂ from the heated solids with CaCO₃. The packed bed of solids contains at the beginning of this step sufficient sensitive heat to accomplish the calcination of CaCO₃, leaving the bed at 725ºC, which is the assumed temperature to start a new CASOH stage in a subsequent cycle. It is assumed that the time given for such a vacuum step (t1=t2=t3=20 min) in this example allows the complete calcination of CaCO₃, leading to a production of a steady flow of 1 kg/s of pure CO₂ during this period.

It is important to highlight that, from the mass and energy balanced noted above, it is evident that the application of the method of this invention to calcine CaCO₃ generated during the CASOH stage almost doubles the efficiency in the generation of H₂-rich gas from BFG respect to the previous state of the art design of the CASOH process. In this example, about 60% of the BFG is converted into a H₂-rich gas without CO₂ while only the remaining 40% of the BFG is used to supply energy for the calcination of CaCO₃ during the step i). This is a substantial improvement with respect to the configuration proposed by the state of the art given by Fernandez et al. (2020), in which only 30% of the BFG could be used to produce H₂-rich gas from the CASOH stage, while the energy contained in the remaining 70% of the BFG had to be extracted as high temperature heat. Furthermore, it will be evident to the skilled in the art that the CO₂ purity of the 1kg/s gas stream during the vacuum stage must be close to 100%CO₂, while the CO₂ rich stream in the CASOH state of the art is only about 55-60%v.

A further example of application of this invention is a variant of this Example 2, when feeding a fuel gas containing CO₂ to the packed bed of solids containing CaO. The fuel gas can be Blast Furnace Gases (BFG or Oxy-BFG) or Basic Oxygen Furnace gas (BOF) from a steel mill plant, which contain CO. Feeding such gas to packed bed of solids containing CaO will form CaCO₃ in the packed bed and generate a gas stream rich in CO. The CO rich gas resulting from this step can be used as a reducing gas in the steel making process, as in other processes for top gas recycle known in the state-of-the-art. In other words, this is a carbonation reaction step similar to the CASOH stage described in the above paragraphs, but without feeding any additional steam with the BFG to the bed of CaO. The remaining steps of the method are similar to the ones described above in this Example 2.

Also note that the application of the method to capture CO₂ from a combustion flue gas by carbonation of CaO in a packed bed, would not differ in any essential feature from the case described in the previous paragraph, except in that the resulting decarbonized flue gas would be emitted to the atmosphere. The remaining steps of the method are similar to the ones described above in this Example 2.

### EXAMPLE 3 (Sorption enhanced reforming process of natural gas with vacuum calcination)

The method of this invention is applied to calcine solids containing CaCO₃ formed during a sorption enhanced reforming (SER) process to convert methane and steam into a H₂-rich product gas, in the presence of CaO as CO₂ sorbent to form CaCO₃ during SER. As in Example 2, the overall process is carried out in a reactor system composed of several adiabatic packed-bed reactors (see Figure 17). As in previous examples, the target in the design is to obtain a flow of 1kg/s of pure CO₂ (7) during the vacuum calcination stage, ii). A CaO-based material acts as CO₂ sorbent during the SER stage iii), whereas a Ni-supported material acts as reforming catalyst during iii) and also as O₂ carrier during the subsequent chemical looping combustion required to carry out the combustion stage i) (see steps j) and jj) in Figure 17). The SER process runs cyclically. For consistency with the previous example, we start the description with a stage in which the formation of CaCO₃ by carbonation of CaO takes place during the SER stage (see step iii) sub-stage k) in Figure 17). Such SER stage, with its sub-stages k) and kk), can be considered part of the state of the art. The bed of solids is assumed to have a mixture of Ca-sorbent material with a 3%w of active CaO and a catalyst/oxygen carrier material with 15%w of active Ni. These solids are mixed in a thermally insulated vessel (1) containing a packed-bed of solids of 10 m long with 2.6 m of inner diameter with a bed density of 1500 kg/m³. In these conditions, when the carbonation and SER stage begins, the bed is loaded with about 79640 kg of solids with 2.1%w of active CaO, 68.8%w of inert CaO, 4.4%w of Ni and 24.7%w of catalyst support. An input methane flow (13) of 0.8 kg/s of CH₄ (i.e., 40 MW_{LHV} of thermal input) is assumed to carry out the SER stage, which is mixed with 2.7 kg/s of steam (14) to obtain a steam-to-carbon molar ratio of 3 in the feed. For simplicity, and since there are no carbon deposition problems as in Example 2, the gaseous mixture is assumed to be fed into the reactor preheated at 625ºC and 1.5 bar. Moreover, the solids in the bed are initially at 725ºC, due to a previous calcination stage (see below how this is the temperature resulting after completion of a full previous cycle). This temperature favours the rapid conversion of CH₄ (and H₂O) to produce H₂ via de steam reforming and water gas shift reactions catalysed by the Ni-based solids. The resulting CO₂ reacts with active CaO to form CaCO₃ as soon as it is produced, which shifts the steam reforming equilibrium towards a higher production of H₂. As in Example 2, the change in temperature in the reaction fronts and the velocity at which both reaction and heat exchange fronts advance through the packed beds are calculated assuming sharp reaction fronts and negligible resistance to mass and heat transfer during the operation. As the carbonation front moves forward, the Ca-based sorbent is left behind carbonated to its maximum possible conversion (i.e., 3% of the total mol of Ca are carbonated or 2,1%w CaO becomes a 3.7%w of CaCO3). The carbonated part of de packed bed acts as a conventional steam methane reformer. Therefore, the high endothermicity of this reaction reduces the temperature of the bottom carbonated part towards an adiabatic equilibrium temperature of 625 ºC (given by the steam-methane reforming equilibrium in the absence of CaO). The CO₂ formed is mostly captured downstream in the carbonation reaction front (marked in Figure 17 with a sharp change in the CaCO₃ (4) content of the solids) and the heat supplied by the carbonation raises the temperature of the solids up to 745 ºC. During the duration of this SER stage, a flow (15) of H₂-rich gas of 2.37 kg/s is produced (composed of 66.9%v H₂, 3.2%v CO, 4.7%v CO₂,1.1%v CH₄ and 24.1%v H₂O from equilibrium calculations of SER reactions), which is emitted at 725ºC. A maximum gas velocity of 2 m/s is calculated. After 20 minutes of operation, the active CaO approaches total carbonation and the packed bed is left with about 81% of the solids at 625 ºC and the remaining 19% at 745ºC, as a result of the advance of the heat exchange front resulting from the carbonation reaction. The excess of thermal energy in the region that remains at 745ºC when the carbonation is completed, can be recovered in chemical form if conventional steam reforming is allowed to follow in a subsequent step kk) as described in the state of the art (Fernandez et al. 2012). Such steam methane reforming stage is introduced to bring the temperature of the whole bed after stage iii) to the steam methane reforming equilibrium temperature of 625 ºC, so that the excess of sensitive heat stored in the bed comes out as a H₂/CO-rich syngas (exit (16) in step kk) that is used in the subsequent NiO reduction stage, sub-step jj) of step i), as fuel gas (8), after mixing (16) with 0.06 kg/s of CH₄ (not shown in Figure 17 for simplicity) to fulfil the heat balance in such fuel combustion stage i). A flow rate of 0.14 kg/s of CH₄ (i.e., 7 MW_{LHV} of thermal input) mixed with steam to reach a steam-to-carbon molar ratio of 3 comes into the packed-bed preheated at 625 ºC. When the gas reaches the part of the solids at 745ºC the methane and H₂O are converted in a syngas (composed of 1.8%v CH₄, 53.6%v H₂, 9.5%v CO, 6.3%v CO₂ and 28.9%v H₂O) suitable to carry out the subsequent NiO reduction stage.

As in previous example, once that the previous reaction stage iii), involving carbonation of CaO to CaCO₃ is completed, the thermally insulated vessel (1) contains CaCO₃ at a certain temperature (625ºC in this example) that is insufficient for calcination. This is when the method of this invention provides a solution of the calcination of such CaCO₃ while generating pure CO₂. The following stage is therefore a fuel combustion step i) to heat up the solids towards calcination temperatures. This is done in this case using chemical looping combustion principles. In a first substep j) of step i), the oxidation of the Ni-based solids to NiO takes place. A flow of 12.5 kg/s of air (9) at 10 bar and 625 ºC allows the complete oxidation of Ni to NiO in only 5 minutes (t4). The heat released due to the oxidation of Ni leads to an increase in temperature in the oxidation front of about 175ºC. The high temperature achieved in the oxidation front (i.e., 800ºC) ensures the complete conversion of the oxygen, giving as a result an outlet flow (10) of 9.96 kg/s basically composed of nitrogen, which is discharged at 625 ºC. The operation is carried out at 10 bar to moderate the leakage of CO₂ caused by partial calcination of CaCO₃ (P_{CO2eq} at 800ºC is 0.217). In these conditions, the product gas (10) only contains 2.17%v of CO₂ and only 8% of the carbonate is calcined in this stage. Once the Ni has been totally oxidized, the bed is divided into two zones at different temperatures as the result of the advance at different velocities of the oxidation and heat exchange fronts. About 6% of the bed (located close to the reactor inlet) is left at 625 ºC and the remaining 94% at 800ºC. In the following sub-step jj) of i), lasting 15 minutes (t1-t4), the combustion of the fuel gas (8) is completed. The fuel gas (8), used to reduce the NiO to Ni, is a mixture of the syngas (16) generated in the steam reforming stage kk), with the additional flow of methane noted above ((8) is made of 0.60 kg/s of syngas at 685ºC (i.e., the average temperature of the syngas coming from the steam reforming step kk)) and 0.06 kg/s of methane at 25ºC). This flow rate (at an average temperature of 650ºC) allows the complete reduction of NiO in the packed bed in the same duration of the SER stage (i.e., t1=t4+(t1-t4)=20 min). The resulting composition of the reducing gas (49.9%v H₂, 8.8%v CO and 8.6%v CH₄) makes the reduction of NiO almost thermally neutral, giving as a result a final bed divided into two fractions: a small part of about 7% located at the bottom at 650 ºC and the rest at 800ºC. In variants of this design, such temperature in the carbonated bed of solids could be increased by increasing the Ni content in the bed at the expense of higher temperatures during the SER stage that will reduce the hydrogen yield.

Once the NiO reduction has finished, and the combustion and heating up step i) is completed, the vacuum calcination of CaCO₃ in the bed of solids ii) is carried out to extract pure CO₂ while solids cool down as a consequence of the application of vacuum (see Figure 8). The packed bed contains enough sensitive heat to calcine the CaCO₃ present in the fully carbonated bed, and leave the solids at 725 ºC, which is a suitable temperature to initiate a new SER stage as assumed at the beginning of this example. The operation can be carried out in 20 minutes, while a flow of 1 kg/s of pure CO₂ is produced as in previous examples. Note that the extraction of the CO₂ when valve (20) is opened to apply vacuum pressure during ii), is arranged in Figure 17 at the bottom of the bed, so that the CO2 exiting the bed can re-heat the region of solids (7% at 650 ºC) at the bottom of the bed.

The overall mass and energy balances described above indicate that the application of the method of this invention to the SER process represents a reduction of more than 30% in the energy requirements for calcination (about 20% of the total input of methane to the process is burned during step i) in this process; while 30% is needed in existing Ca-Cu processes derived from the Fernandez et al. (2012).

## Claims

1. Process to recover in high purity form the CO₂ released from the calcination of solids containing CaCO₃, with said solids being preheated to a temperature between 600-750ºC and arranged in a thermally insulated vessel (1) able to withstand vacuum swings, wherein the process is **characterized by** the continuous repetition, at least twice, of a sequence of at least the following consecutive steps:
i)a heating up step lasting between 5-20 minutes, combusting a fuel (8) within the bed of solids to heat up the bed of solids containing CaCO₃ to 800-900ºC.
ii)a vacuum step lasting between 5-20 minutes, applying an under-atmospheric pressure of 0.05-0.5 atm to the bed of solids.

2. The process of claim 1 where the combustion of the fuel (8) is carried out with air, oxygen-enriched air or O₂-CO₂ comburent mixtures (9).

3. The process of any one of the preceding claims wherein the fuel (8) is a hydrocarbon gas or hydrogen.

4. The process of any one of the preceding claims further comprising a step of introducing a batch of particles of solids containing CaCO₃ (4) in the thermally insulated vessel (1) so that the solids are displaced downwards in each combustion step while extracting a batch of particles containing CaO (5).

5. The process of any one of the preceding claims wherein the combustion taking place in the thermally insulated vessel (1) during the step i) is a chemical looping combustion of the gaseous fuel (8) with air (9) by dividing the step i) in two sub-steps:
j) a first sub-step involving the oxidation with air (9) at a pressure of 1-5 atmospheres of a second solid (12) containing a metal such as Ni or Cu, the second solid being mixed in the bed of CaCO₃ containing solids and releasing a flue gas (10) composed of a major fraction of nitrogen and a minor fraction of CO₂ from the partial decomposition of CaCO₃; and
jj) a second sub-step at atmospheric pressure, involving the reduction of the of the oxidised form of the metal fuel formed in sub-step j) by feeding a fuel gas (8) to regenerate the metal fuel in the second solid (12) while releasing concentrated CO₂ (11).

6. The process of any one of the preceding claims further comprising an additional carbonation step iii) of the CaO (5) generated in step ii) by feeding a combustion flue gas or any other gas containing CO₂ to the packed bed of solids to increase the molar conversion of CaO to CaCO₃ between 0.03 and 0.1 and restore the CaCO₃ (4) in the bed of solids (1) that is at the beginning of step i).

7. The process of any one of claims 1 to 5 further comprising an additional carbonation step iii) of the CaO (5) generated in step ii) by feeding a fuel gas (13) and steam (14) to the packed bed of solids containing CaO and Ni to catalyse the steam reforming of the fuel gas (13) to hydrogen (15) while increasing the molar conversion of CaO to CaCO₃ between 0.03 and 0.1 and restore the CaCO₃ (4) that is in the bed of solids (1) at the beginning of step i).

8. The process of claim 7 further comprising an additional step after the sorption enhanced process by carbonation iii) and before the beginning of a new cycle N+1 with step i), consisting in the feeding a fuel gas (13) and steam (14) to the packed bed of carbonated solids to produce a syngas that is used as fuel gas (8) in sub-step jj) of the next step i) in the cycle N+1.

9. The process of any one of claims 1 to 5further comprising an additional carbonation step iii) of the CaO (5) generated in step ii) by feeding a gas containing CO (13) and steam (14) to the packed bed of solids containing CaO and Cu to catalyse the water gas shift reaction of the CO contained in (13) to hydrogen (15) an CO₂ while increasing the molar conversion of CaO to CaCO₃ between 0.03 and 0.1 and restoring the CaCO₃ (4) that is in the bed of solids (1) at the beginning of step i).

10. The process of claim 5 wherein the fuel (8) is a solid metal such as Fe, Ni or Cu, that exothermically oxidizes with air (9) and that is fed alone or contained in the second solid (12) that is mixed with the solids containing CaCO₃ (4).

11. The process of any one of claims 1 to 10 further comprising an additional gas rejection step by which a gas volume of 1-3 times of the void volume of gas in the packed bed of solids (1) is discharged at the beginning of the vacuum period in step ii).

12. The process of any one of the preceding claims, wherein the thermal power of the combustion during step i) is the result of the multiplication of the average power input in the equivalent kiln without CO₂ capture and the ratio between the sum of the duration step i) and ii) divided by the duration of step i).

13. Shaft kiln to carry out the process of claim 4 to calcine CaCO₃ (4) in the form of limestone and produce concentrated CO₂ (7) and CaO (5), the shaft kiln comprising:
• a first vertical shaft;
• means to stage the burning a fuel (8) with preheated air or other comburent mix (9) in its calcination zone, wherein the kiln being **characterized by** comprising:
• inlet and outlet gas and solid pipes comprising switching valves with at least one of the pipes having a vacuum switching valve (20) connected to a vacuum pump (6) configured to allow the continuous repetition of a sequence of at least a first operating mode and a second operating mode:
• means for feeding a batch of limestone through a solid valve and extracting lime (5) with another solid valve during the first operating period lasting between 5-20 min where fuel (8) is burned within the calcination zone in a staged mode, with the air or other comburent mix being preheated by the CaO (5) and the limestone (4) being preheated with the combustion flue gases flowing from the calcination zone, and
• means for sealing the gas entries/outlets and valves for solids except one gas outlet during the second operating period lasting between 5-20 minutes, where a vacuum pressure is applied using the vacuum pump (6) to extract pure CO₂ (7).

14. The shaft kiln of claim 13 further comprising a second vertical shaft connected to the first vertical shaft, the second vertical shaft comprising an additional flow of air to enter the second vertical shaft, in order to transport heat from the lime cooling region and the hot flue gases to the limestone preheating region.

15. The shaft kiln of any one of claims 13 or 14, wherein the thermally insulated vessel (1) is the calcination section of a shaft kiln further comprising a limestone preheating zone at the top of the kiln (30) and a CaO cooling section (31) that preheats combustion air or other comburent mix (9).
